# EUROPEAN PATENT APPLICATION

(11) **EP 4 687 323 A1**
(43) Date of publication of application: **04.02.2026**
(21) Application number: 25188481.3
(22) Date of filing: 09.07.2025
(51) Int. Cl.: H04L 9/08, B60R 25/24, G07C 9/00

(54) **MANAGEMENT SERVER, MANAGEMENT SYSTEM, DELETION METHOD, AND DELETION PROGRAM**

(30) Priority: 31.07.2024 JP 2024125148
(71) Applicant: TOYOTA JIDOSHA KABUSHIKI KAISHA, Toyota-shi, Aichi-ken 471-8571 (JP)
(72) Inventor: KOBAYASHI, Junya, Toyota-shi,, 471-8571 (JP); HOMMA, Hiroki, Toyota-shi,, 471-8571 (JP); HASEGAWA, Yosuke, Ohguchi-cho, 480-0195 (JP); MURASE, Junji, Ohguchi-cho, 480-0195 (JP); MORI, Yuki, Ohguchi-cho, 480-0195 (JP)
(74) Representative: J A Kemp LLP

(57) **Abstract**

When receiving a deletion request specifying a registered shareable key, a management server executes a deletion process that deletes the shareable key of a target shareable device, which is specified in the received deletion request, and a shareable key that has been registered to a different shareable device based on a request from the target shareable device.

## Description

### CROSS-REFERENCE TO RELATED APPLICATIONS

This application is based upon and claims the benefit of priority from Japanese Patent Application No. 2024-125148, filed on July 31, 2024, the entire contents of which are incorporated herein by reference.

### BACKGROUND

### 1. Field

The present disclosure relates to a management server that manages digital keys, a management system, a deletion method, and a deletion program.

### 2. Description of Related Art

Japanese Laid-Open Patent Publication No. 2023-184349 discloses a digital key system that utilizes a device, such as a smartphone, as a key for a vehicle. The digital key system stores information related to the digital key in the vehicle. Additionally, the digital key system stores information related to the digital key in the device. As a result, the registered device can be used as a digital key to operate the vehicle without the need for a physical key. Furthermore, the digital key system issues a registration request through communication between the device storing the digital key information and another device belonging to a third party, enabling the third party's device to function as a digital key. Thus, the digital key system is configured to register the third party's device as a digital key for the vehicle. In other words, the digital key enables the generation of a new digital key. Accordingly, the digital key system allows the vehicle to be lent to a third party without the need to physically hand over a key.

When multiple digital keys are registered for a single vehicle, a user wishing to delete multiple digital keys must individually select the digital keys to be deleted from among numerous registered digital keys. This process imposes a significant operational burden on the user in performing the deletion of multiple digital keys.

### SUMMARY

In a general aspect, a management server is configured to manage multiple digital keys employed in a vehicle. The digital keys include an owner key registered to an owner device that is a device belonging to an owner of the vehicle, and multiple shareable keys respectively registered to multiple shareable devices. Each of the shareable devices is a device different from the owner device. The management server is configured to execute a deletion process in response to receiving a deletion request specifying one of the shareable keys that is registered to a target shareable device that is one of the shareable devices. The deletion process deletes the shareable key specified in the received deletion request, and one of the shareable keys that has been registered to a different shareable device based on a request from the target shareable device.

In another general aspect, a management system includes a vehicle and a management server configured to manage multiple digital keys employed in the vehicle. The digital keys include an owner key registered to an owner device that is a device belonging to an owner of the vehicle, and multiple shareable keys respectively registered to multiple shareable devices. Each of the shareable devices is a device different from the owner device. The management server is configured to execute a deletion process in response to receiving a deletion request specifying one of the shareable keys that is registered to a target shareable device that is one of the shareable devices. The deletion process deletes the shareable key specified in the received deletion request, and one of the shareable keys that has been registered to a different shareable device based on a request from the target shareable device.

In yet another general aspect, a deletion method is performed by a management server configured to manage multiple digital keys employed in a vehicle. The digital keys include an owner key registered to an owner device that is a device belonging to an owner of the vehicle, and multiple shareable keys respectively registered to multiple shareable devices. Each of the shareable devices is a device different from the owner device. In response to reception of a deletion request specifying one of the shareable keys that is registered to a target shareable device that is one of the shareable devices, the deletion method includes causing processing circuitry of the management server to generate a deletion command to delete the shareable key registered to the target shareable device; and executing a deletion process. The deletion process deletes the shareable key specified in the received deletion request, and one of the shareable keys that has been registered to a different shareable device based on a request from the target shareable device.

In a further general aspect, a deletion program is provided. The deletion program, when executed by processing circuitry, causes the processing circuitry to perform the above-described deletion method.

Other features and aspects will be apparent from the following detailed description, the drawings, and the claims.

### BRIEF DESCRIPTION OF THE DRAWINGS

Fig. 1 is a schematic diagram showing a management system.
Fig. 2 is a schematic diagram showing owner key information.
Fig. 3 is a schematic diagram showing shareable key information.
Fig. 4 is a schematic diagram showing data in a database.
Fig. 5 is an explanatory diagram showing a series of processes executed by the management system when an owner key is registered.
Fig. 6 is an explanatory diagram showing a series of processes executed by the management system when a friend key is registered.
Fig. 7 is an explanatory diagram showing a series of processes executed by the management system when a friend key is registered.
Fig. 8 is an explanatory diagram showing a series of processes executed by the management system when a guest key is deleted in response to a request from a friend device.
Fig. 9 is an explanatory diagram showing a series of processes executed by the management system when a guest key is deleted in response to a request from a guest device.
Fig. 10 is an explanatory diagram showing a series of processes executed by the management system when multiple shareable keys are deleted in response to a request from an owner device.
Fig. 11 is a schematic diagram showing a relationship among multiple shareable devices.
Fig. 12 is a flowchart showing the flow of processes executed by the management server in Fig. 10.
Fig. 13 is a diagram showing a display example of an image presented to allow the user to select a shareable key to be protected.
Fig. 14 is a schematic diagram showing a deletion process executed by the management server in Fig. 10.
Fig. 15 is a schematic diagram showing a relationship among multiple shareable devices according to a modification.

Throughout the drawings and the detailed description, the same reference numerals refer to the same elements. The drawings may not be to scale, and the relative size, proportions, and depiction of elements in the drawings may be exaggerated for clarity, illustration, and convenience.

### DETAILED DESCRIPTION

This description provides a comprehensive understanding of the methods, apparatuses, and/or systems described. Modifications and equivalents of the methods, apparatuses, and/or systems described are apparent to one of ordinary skill in the art. Sequences of operations are exemplary, and may be changed as apparent to one of ordinary skill in the art, with the exception of operations necessarily occurring in a certain order. Descriptions of functions and constructions that are well known to one of ordinary skill in the art may be omitted.

Exemplary embodiments may have different forms, and are not limited to the examples described. However, the examples described are thorough and complete, and convey the full scope of the disclosure to one of ordinary skill in the art.

In this specification, "at least one of A and B" should be understood to mean "only A, only B, or both A and B."

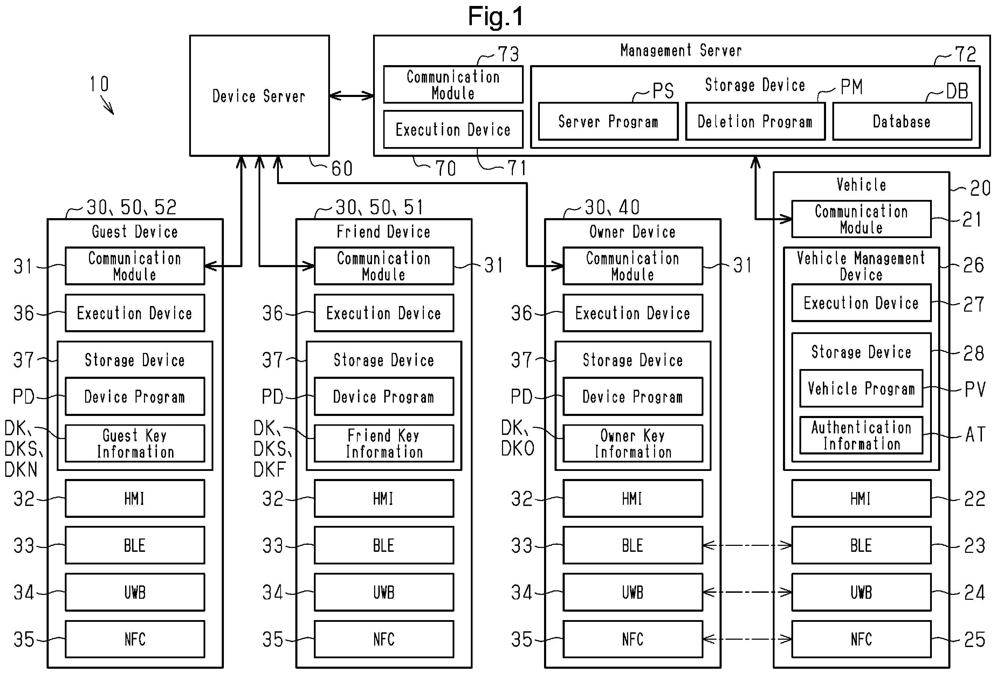

Hereinafter, a management system 10 according to an embodiment will be described with reference to Figs. 1 to 14.

### Overview of Management System 10

As shown in Fig. 1, a management server 70 is one of the devices forming the management system 10. The management server 70 manages information related to multiple digital keys that can be registered to a vehicle 20. Standards for digital keys have been established by the Car Connectivity Consortium (CCC). The digital key functionality in the present embodiment conforms to the standards established by the Car Connectivity Consortium (CCC). The management system 10 includes the vehicle 20, multiple devices 30, a device server 60, and a management server 70.

The vehicle 20 includes a communication module 21, a Human Machine Interface (HMI) 22, a Bluetooth Low Energy (BLE) module 23, an Ultra Wide Band (UWB) module 24, a Near Field Communication (NFC) module 25, and a vehicle management device 26.

The communication module 21 communicates with the management server 70 via a wireless communication network. The HMI 22 includes an input device, which undergoes input operations performed by the user of the vehicle 20, and an output device, which presents information to the user. The output device is, for example, a monitor and a speaker.

The BLE module 23 performs short-range communication with the devices 30 via BLE communication. The UWB module 24 communicates with the devices 30 via UWB communication. The UWB module 24 measures the distance between the devices 30 and the vehicle 20. The NFC module 25 performs short-range communication with the devices 30 via NFC communication.

The vehicle management device 26 is mounted on the vehicle 20. The vehicle management device 26 manages the digital keys of the vehicle 20. The vehicle management device 26 is, for example, a digital key ECU. The vehicle management device 26 includes an execution device 27 and a storage device 28. The storage device 28 stores a vehicle program PV and authentication information AT. The vehicle program PV is executed by the execution device 27 to cause the execution device 27 to store and delete the authentication information AT. The authentication information AT is information for authenticating a digital key so that the vehicle 20 can be controlled using the digital key when the digital key is used. The authentication information AT is provided for each digital key to be authenticated. The execution device 27 is a CPU. The execution device 27 executes the vehicle program PV to execute processes related to storage and deletion of the authentication information AT. The authentication information AT is information related to digital keys.

Authenticating a digital key means enabling the vehicle 20 to be controlled by the digital key. For example, upon authentication of the digital key, the vehicle management device 26 enables unlocking of the vehicle 20. In another example, upon authentication of the digital key, the vehicle management device 26 enables starting of the vehicle 20.

The devices 30 are portable information terminals such as smartphones. Each device 30 includes a communication module 31, an HMI 32, a BLE module 33, a UWB module 34, an NFC module 35, an execution device 36, and a storage device 37.

The communication module 31 communicates with the device server 60 via a wireless communication line. The HMI 32 includes an input device, which undergoes input operations performed by the user of the device 30, and an output device, which presents information to the user. The output device is, for example, a monitor and a speaker.

The BLE module 33 performs short-range communication with the vehicles 20 via BLE communication. The UWB module 34 communicates with the vehicle 20 via UWB communication. The NFC module 35 performs short-range communication with the vehicles 20 via NFC communication.

The storage device 37 stores a device program PD and key information DK. The device program PD is executed by the execution device 36 to cause the execution device 36 to store and delete the key information DK. The key information DK is information indicating digital keys. That is, the key information DK is information related to digital keys.

The device program PD includes, for example, a device application and a digital key framework. The device application is an application for storing and deleting the key information DK. The digital key framework is a program that provides functions of pairing of the devices 30 and sharing of digital keys by using an API prepared in the OS. The execution device 36 executes the device program PD to execute processes related to storage and deletion of the key information DK.

The multiple devices 30 include an owner device 40 and shareable devices 50. The owner device 40 is a device 30 belonging to the owner of a vehicle 20. The owner device 40 stores owner key information DKO indicating the owner key KO as the key information DK. The owner key information DKO is information related to the owner key KO. Only one owner key KO is allowed to be registered to a single vehicle 20. Therefore, there is only one owner key KO for each vehicle 20.

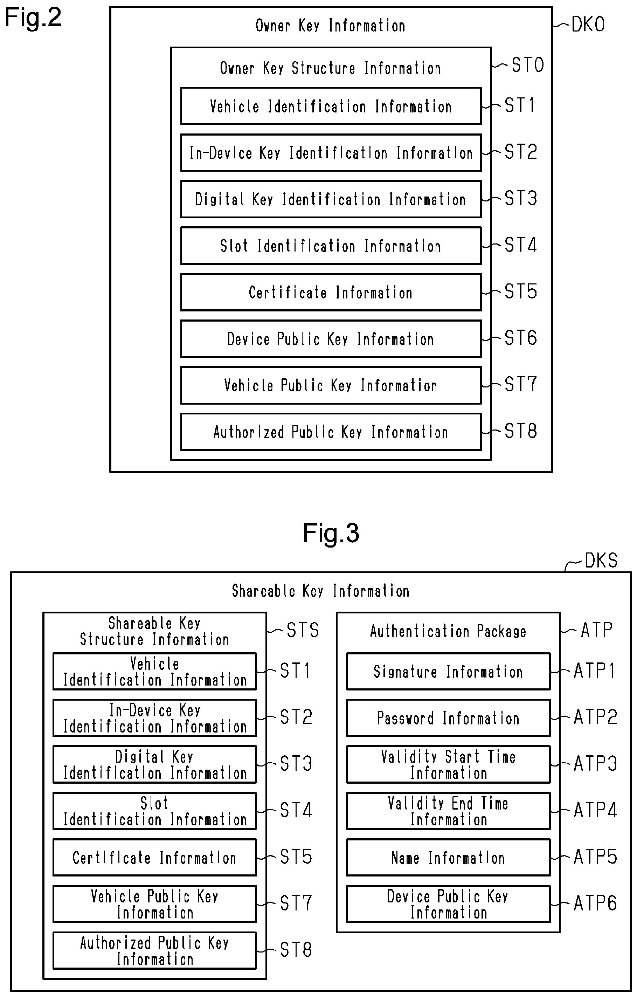

As shown in Fig. 2, the owner key information DKO includes owner key structure information STO. The owner key structure information STO includes vehicle identification information ST1, in-device key identification information ST2, digital key identification information ST3, and slot identification information ST4. The owner key structure information STO further includes certificate information ST5, device public key information ST6, vehicle public key information ST7, and authorized public key information ST8.

The vehicle identification information ST1 is information used to identify the vehicle 20 for which digital keys are assigned. For example, the vehicle identification information ST1 is the ID of a vehicle 20.

The in-device key identification information ST2 is used for management of digital keys in the device 30. The in-device key identification information ST2 is information used to identify digital keys in the application of the device 30.

The digital key identification information ST3 is used for management of digital keys in the management server 70. The slot identification information ST4 is information used to identify digital keys locally within the devices 30.

The certificate information ST5 indicates a certificate that authenticates digital keys. The device public key information ST6 indicates a device public key PKD, which is a public key of the device 30. The device public key PKD in the owner key information DKO indicates the public key of the owner device 40. The vehicle public key information ST7 indicates an in-vehicle public key PKV, which is a public key of the vehicle 20. The authorized public key information ST8 indicates the vehicle public key PKV that has already been authorized.

As shown in Fig. 1, the shareable devices 50 each store shareable key information DKS indicating a shareable key KS as the key information DK. The shareable key information DKS is information related to the shareable key KS. Multiple shareable keys KS can be registered to one vehicle 20 when digital keys are registered so as to be usable. That is, multiple shareable keys KS may be associated with a single vehicle 20.

The shareable devices 50 include friend devices 51 and guest devices 52. The friend devices 51 each store friend key information DKF indicating a friend key KF as the shareable key information DKS. The friend key information DKF is information related to a shareable key KS. The guest devices 52 each store guest key information DKN indicating a guest key KN as the shareable key information DKS. The guest key information DKN is information related to a shareable key KS. That is, the types of the shareable keys KS include the friend key KF and the guest key KN.

The friend key KF is a shareable key KS that has been registered based on a direct registration request D21 from the owner device 40, as described later. The registration request D21 is a request to store the friend key information DKF, which is key information DK, in a device 30. That is, the registration request D21 is a request to store information related to new shareable key KS in another device 30.

The guest key KN is a shareable key KS that has been registered based on a registration request D31 from a friend device 51, as described later. The registration request D31 is a request to store the guest key information DKN, which is new shareable key information DKS, in a device 30. That is, the registration request D31 is a request to store information related to new shareable key KS in another device 30. The guest key KN is a shareable key KS registered based on an indirect registration request from the shareable device 50 which is a device 30 different from the owner device 40.

A state in which the digital key is registered refers to a state in which the digital key is available for use. In other words, in a state in which a digital key is registered, the vehicle 20 stores the authentication information AT corresponding to the key information DK, and the device 30 stores the key information DK corresponding to the authentication information AT. The authentication information AT is information related to digital keys. In a state in which a digital key is registered, the vehicle 20 stores information related to the digital key. The key information DK is information related to the digital key. In a state in which a digital key is registered, the device 30 stores information related to the digital key. In a case in which the key information DK is information related to the shareable key KS, the authentication information AT corresponding to the key information DK is also information related to the shareable key KS.

As shown in Fig. 3, the shareable key information DKS includes shareable key structure information STS and an authentication package ATP. The shareable key structure information STS includes vehicle identification information ST1, in-device key identification information ST2, digital key identification information ST3, and slot identification information ST4. The shareable key structure information STS includes certificate information ST5, vehicle public key information ST7, and authorized public key information ST8. In other words, the shareable key structure information STS is information obtained by removing the device public key information ST6 from the owner key structure information STO.

The authentication package ATP includes signature information ATP1, password information ATP2, validity start time information ATP3, validity end time information ATP4, name information ATP5, and device public key information ATP6.

The signature information ATP1 indicates that the shareable device 50 is an authorized entity for receiving the digital key. For example, in the case of the friend device 51, the signature information ATP1 indicates a signature by the owner device 40. The signature information ATP1 of the friend device 51 indicates that the owner device 40 has signed the device public key PKD of the friend device 51 indicated by the device public key information ATP6. Further, for example, in the case of the guest device 52, the owner signature information indicates a signature by the friend device 51. The signature information ATP1 of the guest device 52 indicates that the friend device 51 has signed the device public key PKD of the guest device 52 indicated by the device public key information ATP6.

The password information ATP2 indicates a pairing password PAS used to establish a secure channel during the pairing between the vehicle 20 and the owner device 40. The validity start time information ATP3 indicates the earliest date and time at which the shareable key KS becomes valid for use. The validity end time information ATP4 indicates the latest date and time until which the shareable key KS remains valid for use. The name information ATP5 indicates a name for identifying the shareable devices 50 storing the shareable key information DKS. The name information ATP5 is set to an identifiable name for each of the shareable devices 50, for example, by an operation from the owner device 40.

As shown in Fig. 1, the device server 60 relays communication between the devices 30 and the management server 70. The device server 60 is provided for each type of the devices 30. That is, the device server 60 used for communication with a first type of device 30 differs from the device server 60 used for communication with a second type of device 30. Each device server 60 relays communication between the device 30 and the management server 70. This allows the devices 30 of different types to communicate with the management server 70 via the device server 60. Fig. 1 shows only one device server 60.

### Management Server 70

The management server 70 manages digital keys. The management server 70 is capable of communicating with the vehicle 20 and multiple devices 30. The management server 70 includes an execution device 71, a storage device 72, and a communication module 73. The communication module 73 communicates with the device server 60 via a wireless communication line. Further, the communication module 73 is capable of wirelessly communicating with the communication module 21 of the vehicle 20.

The storage device 72 stores a server program PS, a deletion program PM, and a database DB. The server program PS is executed by the execution device 71 to cause the execution device 71 to register digital keys to the database DB and delete digital keys from the database DB. The deletion program PM is executed by the execution device 71 to cause the execution device 71 to execute a process of generating a command to delete the shareable key KS. The deletion program PM is executed by the execution device 71 to cause the execution device 71 to execute a process of deleting the shareable key KS. The execution device 71 executes the deletion program PM to execute a process of generating a command to delete the shareable key KS. The execution device 71 executes a process of deleting the shareable key KS by executing the deletion program PM.

The database DB associates each of the multiple digital keys with the corresponding vehicle 20 and the registered device 30. The data DA in the database DB is partitioned by vehicle 20. In a state in which digital keys are registered, the management server 70 stores, in the data DA, information indicating devices 30 to which key information DK indicating the digital keys.

Authority includes, for example, the number of shareable keys KS that may be requested for registration, and the scope of control over the vehicle 20 enabled through authentication of the digital key. Higher hierarchical levels correspond to greater authority. Thus, for example, the number of shareable keys KS that can be requested to be registered increases as the hierarchy level increases. Specifically, for example, the number of friend keys KF that an owner device 40 is permitted to request for registration is greater than the number of guest keys KN that a friend device 51 is permitted to request for registration.

In addition, for example, since higher hierarchical levels correspond to greater authority, the control range of the controllable vehicle 20 expands. The control scope over the vehicle 20 refers to the set of controllable functions, such as engine start control of the vehicle 20, power-on control of the vehicle 20, and door unlocking and locking control of the vehicle 20. For example, when the control scope includes all three of the above functions, the control scope is broader than when it includes only door unlocking and locking control of the vehicle 20. Specifically, the control scope of the vehicle 20 permitted by the friend key KF includes all three functions described above, whereas the control scope permitted by the temporary key KN is limited to only the door unlocking and locking control of the vehicle 20.

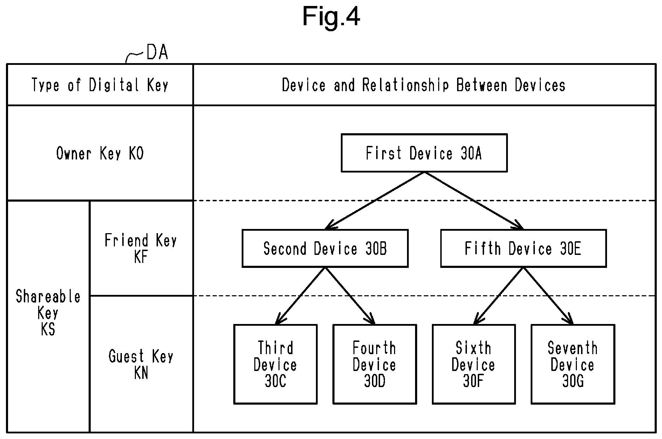

As shown in Fig. 4, the data DA of one vehicle 20 includes information related to the types of digital keys registered to the vehicle 20, the registered devices 30, and the relationship between the registered devices 30. The hierarchy level is determined by the type of digital key. From highest to lowest in the hierarchy, the digital keys are ordered as the owner key KO, the friend key KF, and the guest key KN.

A state will now be described in which digital keys are registered to seven devices 30 for one vehicle 20. The seven devices 30 are a first device 30A, a second device 30B, a third device 30C, a fourth device 30D, a fifth device 30E, a sixth device 30F, and a seventh device 30G. The digital key registered to the first device 30A is referred to as a first digital key K1. The digital key registered to the second device 30B is referred to as a second digital key K2. The digital key registered to the third device 30C is referred to as a third digital key K3. The digital key registered to the fourth device 30D is referred to as a fourth digital key K4. The digital key registered to the fifth device 30E is referred to as a fifth digital key K5. The digital key registered to the sixth device 30F is referred to as a sixth digital key K6. The digital key registered to the seventh device 30G is referred to as a seventh digital key K7.

In the data DA, the device 30 to which the type of digital key is registered as the owner key KO is the first device 30A. In other words, the first device 30A is the owner device 40. Accordingly, the first digital key K1 is the owner key KO.

In the data DA, the devices 30 for which the type of digital key is registered as the shareable key KS are the second device 30B, the third device 30C, the fourth device 30D, the fifth device 30E, the sixth device 30F, and the seventh device 30G. In other words, the second device 30B, the third device 30C, the fourth device 30D, the fifth device 30E, the sixth device 30F, and the seventh device 30G are shareable devices 50. Accordingly, the second digital key K2, the third digital key K3, the fourth digital key K4, the fifth digital key K5, the sixth digital key K6, and the seventh digital key K7 are all shareable keys KS.

Specifically, in the data DA, the devices 30 for which the type of digital key is registered as the friend key KF are the second device 30B and the fifth device 30E. That is, the second device 30B and the fifth device 30E are friend devices 51. In the data DA, the devices 30 to which the type of digital key is registered as the guest key KN are the third device 30C, the fourth device 30D, the sixth device 30F, and the seventh device 30G. That is, the third device 30C, the fourth device 30D, the sixth device 30F, and the seventh device 30G are guest devices 52.

In the data DA, the relationship between the second device 30B and the first device 30A is such that the friend key KF has been registered to the second device 30B based on a registration request from the first device 30A. In other words, the second digital key K2 is registered based on the first digital key K1.

In the data DA, the relationship between the fifth device 30E and the first device 30A is such that the friend key KF is registered to the fifth device 30E based on a registration request from the first device 30A. That is, the fifth digital key K5 is registered based on the first digital key K1.

In the data DA, the relationship between the third device 30C and the second device 30B is such that the guest key KN has been registered to the third device 30C based on a registration request from the second device 30B. In other words, the third digital key K3 is registered based on the second digital key K2.

In the data DA, the relationship between the fourth device 30D and the second device 30B is such that the guest key KN has been registered to the fourth device 30D based on a registration request from the second device 30B. In other words, the fourth digital key K4 is registered based on the second digital key K2.

In the data DA, the relationship between the sixth device 30F and the fifth device 30E is such that the guest key KN has been registered to the sixth device 30F based on a registration request from the fifth device 30E. In other words, the sixth digital key K6 is registered based on the fifth digital key K5.

In the data DA, the relationship between the seventh device 30G and the fifth device 30E is such that the guest key KN has been registered to the seventh device 30G based on a registration request from the fifth device 30E. In other words, the seventh digital key K7 is registered based on the fifth digital key K5.

As described above, the data DA stores devices 30 that have been registered as digital keys. In addition, when each of the devices 30 is registered, information indicating the device 30 that has made a request causing the registration is associated with the registered device 30. The data DA also includes information indicating the digital key on which the registration of each digital key is based.

### Registration of Digital Keys

Next, a series of processes for registering digital keys to the management system 10 will be described. The management system 10 performs, as the registration of digital keys, the registration of the owner key KO, the registration of the friend key KF, and the registration of the guest key KN. The following description explains the overall process from a state in which no digital key is registered to a state in which digital keys are registered. In the following description, processes executed by the execution device 27 of the vehicle management device 26 are described as processes executed by the vehicle 20. In the following description, the processes executed by the execution device 36 will be described as processes executed by the device 30. In the following description, processes executed by the execution device 71 are described as processes executed by the management server 70.

### Registration of the Owner Key

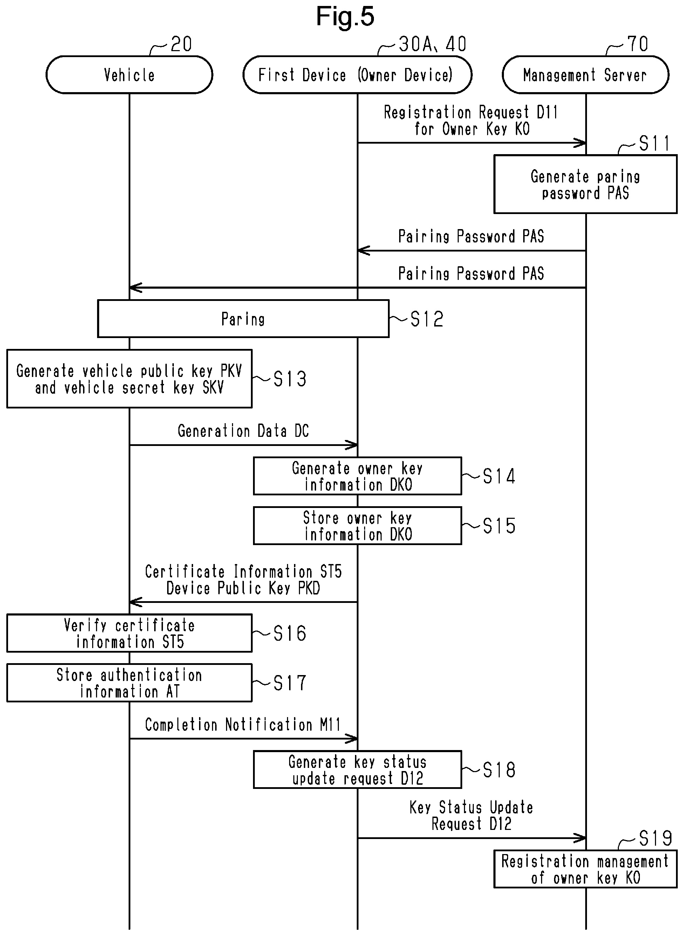

As shown in Fig. 5, the management system 10 executes a series of processes in order to register the owner key KO. Among the devices 30 that do not store the key information DK indicating the owner key KO, the device 30 that is designated as the owner device 40 is referred to as the first device 30A.

The management system 10, upon registration of the owner key KO, stores the key information DK that indicates the owner key KO in the first device 30A. The management system 10 causes the vehicle 20 to store the authentication information AT for authenticating the owner key KO through the registration of the owner key KO. As a result, the first device 30A is configured as the owner device 40. In the example described herein, the first device 30A already has an application installed prior to the registration of the owner key KO.

Upon receiving a registration request D11 for the owner key KO from the first device 30A or the like, the management server 70 executes the process of step S11. In step S11, the management server 70 generates a pairing password PAS. The management server 70 then transmits information indicating the pairing password PAS to the vehicle 20 and the first device 30A.

Thereafter, the vehicle 20 receives the pairing password PAS. After receiving the pairing password PAS, the vehicle 20 is set to a pairing mode via the HMI 22. The vehicle 20 then stands by in a state in which the vehicle 20 can receive the password from the first device 30A. The vehicle 20 then advances the process to step S12.

In step S12, the vehicle 20 performs pairing with the first device 30A. When the pairing is performed, the vehicle 20 establishes a secure channel for data transmission with the first device 30A. The pairing is performed using the pairing password PAS transmitted from the management server 70 to the vehicle 20 and the first device 30A. When the pairing is completed, the vehicle 20 advances the process to step S13.

In step S13, the vehicle 20 generates a vehicle public key PKV, which is a public key of the vehicle 20, and a vehicle secret key SKV, which is a secret key of the vehicle 20. Thereafter, the vehicle 20 transmits generation data DC for generating the owner key KO to the first device 30A via the secure channel. The generation data DC includes the vehicle identification information ST1 and the vehicle public key information indicating the vehicle public key PKV. Then, the first device 30A receives the generation data DC. Thereafter, the first device 30A advances the process to step S14.

In step S14, the first device 30Agenerates owner key information DKO indicating the owner key KO. Thereafter, the first device 30A advances the process to step S15.

In step S15, the first device 30A stores the owner key information DKO. As a result, the first device 30A is configured as the owner device 40. That is, the registration request D11 is a request to store the owner key information DKO, which is the key information DK, in the device 30. Subsequently, the first device 30A transmits, to the vehicle 20, the certificate information ST5 related to the owner key KO and the device public key information ST6 indicating the device public key PKD.

Thereafter, upon receiving the certificate information ST5 and the device public key information ST6, the vehicle 20 executes the process of step S16. In step S16, the vehicle 20 verifies the certificate information ST5. When the verification of the certificate information ST5 is completed, the vehicle 20 advances the process to step S17.

In step S17, the vehicle 20 stores the device public key information ST6 indicating the device public key PKD as the authentication information AT. Subsequently, the vehicle 20 transmits a completion notification M11 to the first device 30A, indicating that the storage of the authentication data AT has been completed.

Thereafter, upon receiving the completion notification M11, the first device 30A executes the process of step S18. In step S18, the first device 30A generates a key status update request D12 for the owner key KO. The key status update request D12 is a signal for requesting the management server 70 to update the database DB. The first device 30A then transmits the key status update request D12 for the owner key KO to the management server 70 via the device server 60.

Thereafter, upon receiving the key status update request D12, the management server 70 executes the process of step S19. In step S19, the management server 70 performs registration management of the owner key KO. Specifically, the management server 70 stores, in the data DA of the vehicle 20 in the database DB, the first device 30A as the device 30 to which the owner key KO is registered. The management system 10 then terminates the series of processes for the owner key KO.

### Registration of the Friend Key KF

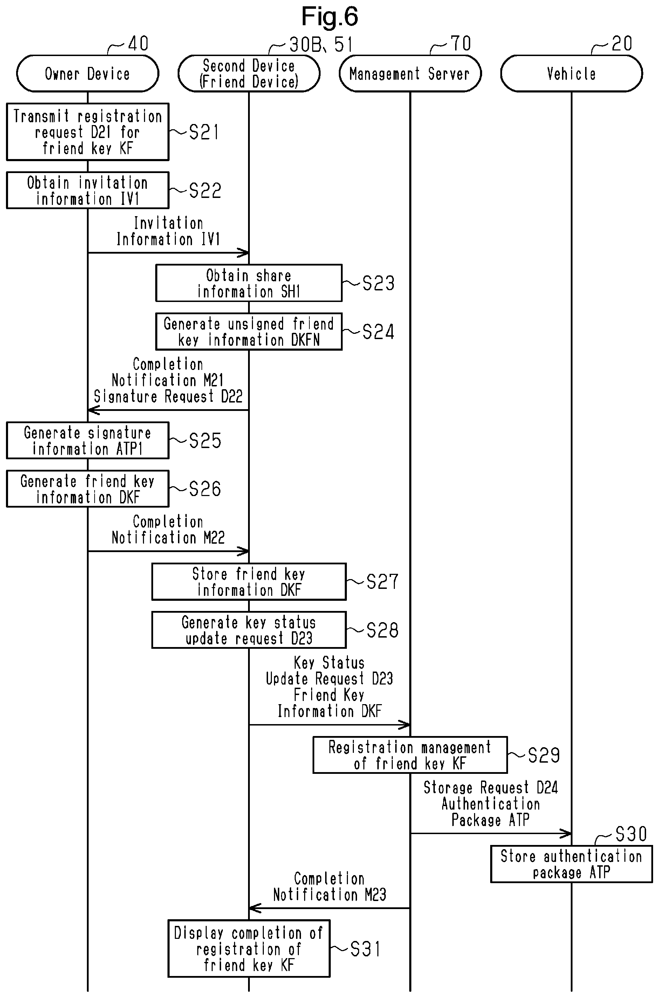

As shown in Fig. 6, the management system 10 executes a series of processes in order to register the friend key KF. Among the devices 30 that do not store the friend key information DKF, the management system 10 designates, as the second device 30B, the device 30 to be designated as the friend device 51 through the series of processes.

When an operation for requesting the registration of the friend key KF is performed in the owner device 40, the owner device 40 first executes the process of step S21. In step S21, the owner device 40 transmits a registration request D21 for the friend key KF to a relay server (not shown). Thereafter, the owner device 40 advances the process to step S22.

In step S22, the owner device 40 obtains invitation information IV1 for sharing a digital key from the relay server. The invitation information IV1 is, for example, a URL link. The URL link contains share information SH1 necessary to share the digital key. Thereafter, the owner device 40 transmits the invitation information IV1 to the second device 30B.

Thereafter, upon receiving the invitation information IV1, the second device 30B executes the process of step S23. In step S23, the second device 30B obtains the share information SH1 based on the invitation information IV1. Specifically, the second device 30B downloads the share information SH1 from the source of the URL link.

The share information SH1 includes, for example, the shareable key structure information STS, the password information ATP2, the validity start time information ATP3, the validity end time information ATP4, and the name information ATP5. The validity start time information ATP3, the validity end time information ATP4, and the name information ATP5 are configured by the owner device 40. Thereafter, the second device 30B advances the process to step S24.

In step S24, the second device 30B generates unsigned friend key information DKFN by using the share information SH1. The unsigned friend key information DKFN is friend key information DKF that does not have the signature information ATP1. Specifically, the second device 30B generates each piece of information contained in the acquired share information SH1 as individual elements of the unsigned friend key information DKFN. Thereafter, the second device 30B transmits a completion notification M21 to the owner device 40, indicating that the upload of the generated unsigned friend key information DKFN to the URL link has been completed. The second device 30B also transmits a signature request D22 to the owner device 40.

Subsequently, the owner device 40 receives the completion notification M21 and the signature request D22 from the second device 30B. Upon receiving the completion notification M21, the owner device 40 obtains the unsigned friend key information DKFN. When the owner device 40 receives the signature request D22, the owner device 40 is operated to execute the process of step S25.

In step S25, the owner device 40 generates the signature information ATP1. Specifically, the owner device 40 causes the HMI 32 to present the unsigned friend key information DKFN that has been obtained, and accepts an operation indicating that the user of the owner device 40 has agreed to the registration of the friend key KF. Upon receiving the operation, the owner device 40 obtains the signature based on the operation. The owner device 40 then advances the process to step S26.

In step S26, the owner device 40 adds the signature information ATP1 to the unsigned friend key information DKFN. The owner device 40 thus generates the friend key information DKF. Thereafter, the owner device 40 uploads the generated friend key information DKF to the URL link, which is the invitation information IV1. Then, the owner device 40 transmits, to the second device 30B, a completion notification M22 indicating that uploading of the completed friend key information DKF to the URL link has been completed.

Thereafter, the second device 30B obtains the completion notification M22. Then, the second device 30B executes the process of step S27. In step S27, the second device 30B stores the friend key information DKF by downloading it. As a result, the second device 30B becomes the friend device 51. Thereafter, the second device 30B advances the process to step S28.

In step S28, the second device 30B generates a key status update request D23 for the friend key KF. The second device 30B then transmits, to the management server 70, the friend key information DKF and the key status update request D23 for the friend key KF.

Thereafter, upon receiving the key status update request D23 for the friend key KF, the management server 70 executes the process of step S29. In step S29, the management server 70 performs registration management of the friend key KF. The key status update request D23 is a request to store new authentication information AT in the vehicle 20. That is, the key status update request D23 is a request to store information related to the digital key in the vehicle 20.

Specifically, the management server 70 checks that the friend key KF, which is the subject of the key status update request D23, is not listed in a revocation list. The revocation list is a list indicating shareable keys KS, including friend keys KF and guest keys KN, for which deletion requests have already been received. If the friend key KF is listed in the revocation list, the management server 70 transmits a notification to the second device 30B indicating that it cannot respond to the key status update request D23.

On the other hand, when the friend key KF for which the key status update request D23 has been received is not listed in the revocation list, the management server 70 registers the friend key KF for which the key status update request D23 has been received in the database DB. Specifically, the management server 70 stores the second device 30B as the device 30 registered as the friend device 51 in the data DA of the vehicle 20 in the database DB. The management server 70 stores the relationship between the second device 30B and the owner device 40 by referencing the obtained friend key information DKF.

Subsequently, the management server 70 transmits, to the vehicle 20, the authentication package ATP, which is part of the friend key information DKF, along with a storage request D24, which requests the storage of the authentication package ATP. That is, the management server 70 transmits the device public key information ST6, which indicates the device public key PKD of the friend device 51, to the vehicle 20. The management server 70 notifies the vehicle 20 that the device public key PKD has been signed by the owner device 40.

Thereafter, upon receiving the storage request D24 and the authentication package ATP from the management server 70, the vehicle 20 executes the process of step S30. In step S30, the vehicle 20 stores the received authentication package ATP as the authentication information AT for authenticating the friend key KF.

After completing the registration management, the management server 70 transmits a completion notification M23 of the key status update to the second device 30B.

Thereafter, upon receiving the completion notification M23 of the key status update, the second device 30B executes the process of step S31. In the process of step S31, the second device 30B presents information indicating the completion of the registration of the friend key KF on the HMI 32. For example, the second device 30B displays an image indicating the completion of the registration of the friend key KF on the HMI 32. As a result, the management system 10 terminates the series of processes for registering the friend key KF.

### Registration of the Guest Key KN

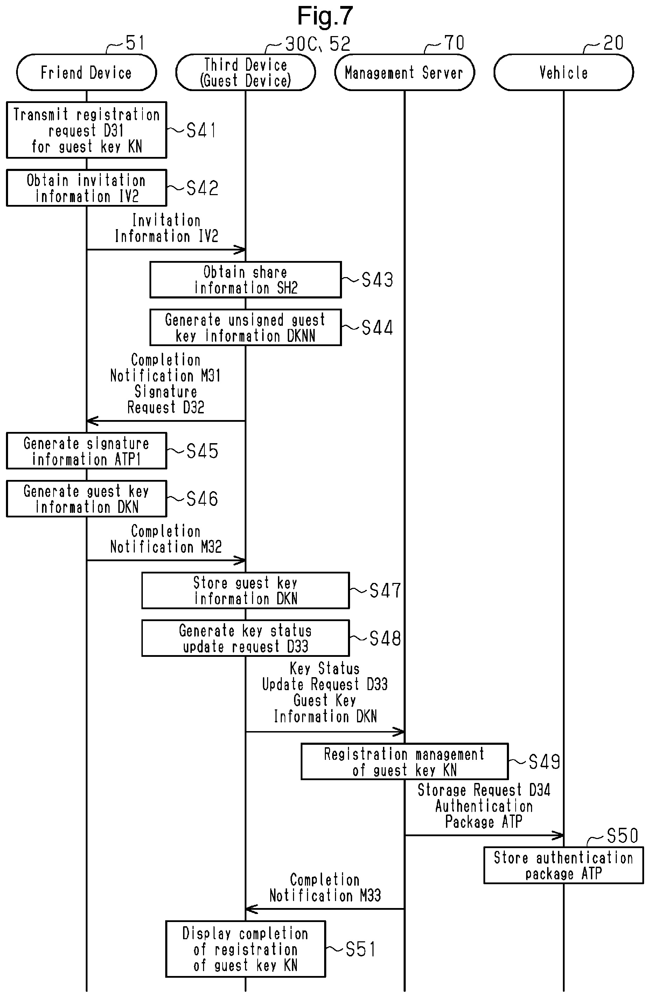

As shown in Fig. 7, the management system 10 executes a series of registration processes in order to register the guest key KN. Among the devices 30 that do not store the guest key information DKN, the management system 10 designates, as the third device 30C, the device 30 to be designated as the guest device 52 through the series of processes.

When an operation for requesting the registration of the guest key KN is performed in the second device 30B, which is the friend device 51, the friend device 51 first executes the process of step S41. In step S41, the friend device 51 transmits a registration request D31 for the guest key KN to the relay server (not shown). Thereafter, the friend device 51 advances the process to step S42.

In step S42, the friend device 51 obtains invitation information IV2 for sharing a digital key from the relay server. The invitation information IV2 is, for example, a URL link. The URL link contains share information SH2 necessary to share the digital key. Thereafter, the friend device 51 transmits the invitation information IV2 to the third device 30C.

Thereafter, upon receiving the invitation information IV2, the third device 30C executes the process of step S43. In step S43, the third device 30C obtains the share information SH2 based on the invitation information IV2. Specifically, the third device 30C downloads the share information SH2 from the URL link.

The share information SH2 includes, for example, the shareable key structure information STS, the password information ATP2, the validity start time information ATP3, the validity end time information ATP4, and the name information ATP5. The validity start time information ATP3, the validity end time information ATP4, and the name information ATP5 are configured by the friend device 51. Thereafter, the third device 30C advances the process to step S44.

In step S44, the third device 30C generates unsigned guest key information DKNN using the share information SH2. The unsigned guest key information DKNN is guest key information DKN that does not have the signature information ATP1. Specifically, the third device 30C generates each piece of information included in the acquired share information SH2 as each piece of information of the unsigned guest key information DKNN. Subsequently, the third device 30C transmits a completion notification M31 to the friend device 51, indicating that the upload of the generated unsigned guest key information DKNN to the URL link has been completed. The third device 30C also transmits a signature request D32 to the friend device 51.

Subsequently, the friend device 51 receives the completion notification M31 and the signature request D32 from the third device 30C. Upon receiving the completion notification M31, the friend device 51 obtains the unsigned guest key information DKNN. Upon receiving the signature request D32, the friend device 51 is operated to execute the process of step S45.

In step S45, the friend device 51 generates the signature information ATP1. Specifically, the friend device 51 causes the HMI 32 to present the unsigned guest key information DKNN that has been obtained, and accepts an operation indicating that the user of the friend device 51 has agreed to the registration of the guest key KN. Upon receiving the operation, the friend device 51 obtains the signature based on the operation. Thereafter, the friend device 51 advances the process to step S46.

In step S46, the friend device 51 adds the signature information ATP1 to the unsigned guest key information DKNN. The friend device 51 thus generates the guest key information DKN. Thereafter, the friend device 51 uploads the generated guest key information DKN to the URL link, which is the invitation information IV2. Then, the friend device 51 transmits, to the third device 30C, a completion notification M32 indicating that uploading of the completed guest key information DKN to the URL link has been completed.

Thereafter, the third device 30C obtains the completion notification M32. Then, the third device 30C executes the process of step S47. In step S47, the third device 30C downloads and stores the guest key information DKN. As a result, the third device 30C becomes the guest device 52. Thereafter, the third device 30C advances the process to step S48.

In step S48, the third device 30C generates a key status update request D33 for the guest key KN. The third device 30C transmits the guest key information DKN and the key status update request D33 for the guest key KN to the management server 70.

Thereafter, upon receiving the key status update request D33 for the guest key KN, the management server 70 executes the process of step S49. In step S49, the management server 70 performs registration management of the guest key KN.

Specifically, the management server 70 checks that the guest key KN, which is the subject of the key status update request D33, is not listed in the revocation list. If the guest key KN is listed in the revocation list, the management server 70 transmits a notification to the third device 30C indicating that it cannot respond to the key status update request D33.

On the other hand, in a case in which the guest key KN is not listed in the revocation list, the management server 70 registers the guest key KN, which is the subject of the key status update request D33, to the database DB. Specifically, the management server 70 stores the third device 30C as the device 30 registered as the guest device 52 in the data DA of the vehicle 20 in the database DB. The management server 70 stores the relationship between the third device 30C and the friend device 51 by referencing the obtained guest key information DKN. Specifically, the management server 70 stores the third device 30C as the device 30 having the guest key KN registered to response to the registration request D31 from the second device 30B.

Subsequently, the management server 70 transmits, to the vehicle 20, the authentication package ATP, which is part of the guest key information DKN, along with a storage request D34, which requests the storage of the authentication package ATP. That is, the management server 70 transmits the device public key information ST6, which indicates the device public key PKD of the guest device 52, to the vehicle 20. The management server 70 notifies the vehicle 20 that the device public key PKD has been signed by the friend device 51.

Upon receiving the key status update request D33, the management server 70 transmits, to the vehicle 20, the storage request D34 for requesting storage of the authentication package ATP, which is information related to the digital key. That is, the key status update request D33 is a request to store information related to the digital key in the vehicle 20.

Thereafter, upon receiving the authentication package ATP and the storage request D34, the vehicle 20 executes the process of step S50. In step S50, the vehicle 20 stores the received authentication package ATP. That is, the vehicle 20 stores the authentication package ATP as the authentication information AT for authenticating the guest key KN.

After completing the registration management, the management server 70 transmits a completion notification M33 of the key status update to the second device 30B.

Thereafter, upon receiving the completion notification M33 of the key status update, the third device 30C executes the process of step S51. In the process of step S51, the third device 30C presents information indicating completion of the registration of the guest key KN on the HMI 32. For example, the third device 30C displays an image indicating the completion of the registration of the guest key KN on the HMI 32. As a result, the management system 10 terminates the series of processes for registering the guest key KN.

### Deletion of the Guest Key KN

Next, a series of processes for deleting the guest key KN in the management system 10 will be described. The following describes the overall process from a state in which the guest key KN key is registered to a state in which the guest key KN is no longer registered. In the following description, processes executed by the execution device 27 will be described as processes executed by the vehicle 20, processes executed by the execution device 36 will be described as processes executed by the device 30, and processes executed by the execution device 71 will be described as processes executed by the management server 70.

### Deletion of the Guest Key KN by Deletion Reservation D41 from the Friend Device 51

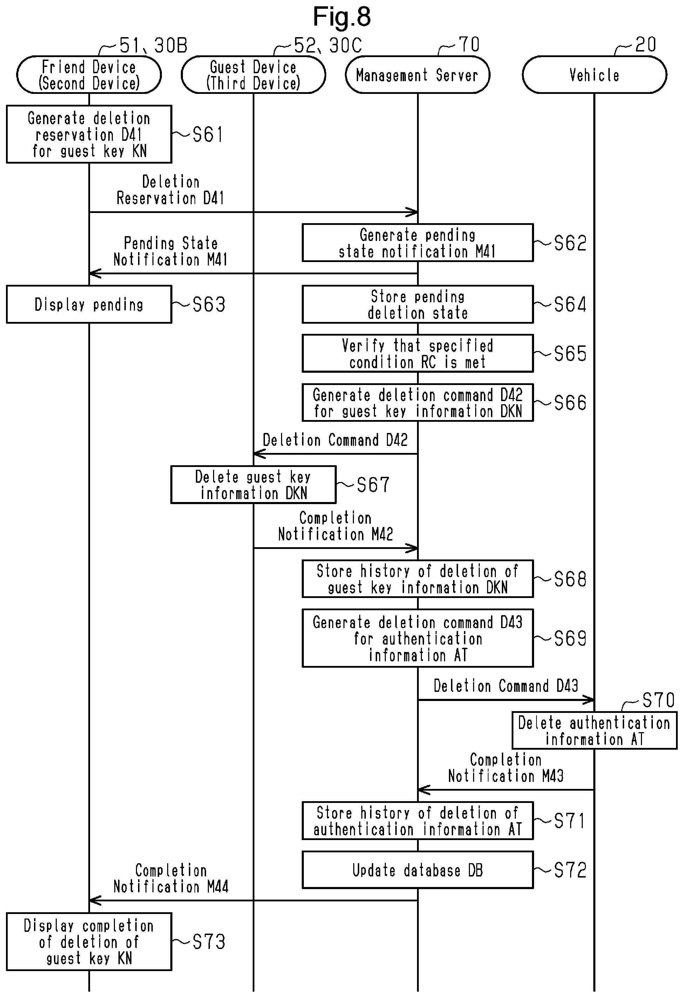

As shown in Fig. 8, the management system 10 executes a series of processes for deleting the guest key KN based on a deletion reservation D41 from the second device 30B, which is the friend device 51.

When an operation for requesting the deletion of the guest key KN is performed in the friend device 51, the friend device 51 first executes the process of step S61. In step S61, the deletion reservation D41 for the guest key KN is generated. The deletion reservation D41 is a signal for reserving the deletion of the guest key KN.

The deletion reservation D41 includes a signal requesting the deletion of the guest key KN, digital key identification information ST3 indicating the guest key KN, and information indicating a specified condition RC. The specified condition RC is a condition necessary for starting deletion after the deletion reservation D41 is received. The specified condition RC is determined in advance. The specified condition RC is, for example, that a predetermined pending deletion period has elapsed since the deletion reservation D41 is received. The deletion reservation D41 includes name information ATP5, which is information for identifying the friend device 51 that transmits the deletion reservation D41 to the management server 70. Then, the friend device 51 transmits the deletion reservation D41 for the guest key KN to the management server 70.

Thereafter, upon receiving the deletion reservation D41 for the guest key KN, the management server 70 executes the process of step S62. In step S62, the management server 70 generates a pending state notification M41, which indicates that the deletion is pending, based on the deletion reservation D41. Then, the management server 70 transmits the pending state notification M41 to the friend device 51.

Thereafter, upon receiving the pending state notification M41, the friend device 51 executes the process of step S63. In step S63, the friend device 51 causes the HMI 32 to present information indicating that deletion of the guest key KN, which is the subject of the deletion reservation D41, is pending.

After the process of step S62, the management server 70 executes the process of step S64. In step S64, the management server 70 stores the state of the guest key KN, which is the subject of the deletion reservation D41, in the database DB as being in a pending deletion state. The pending deletion state is a state in which the deletion reservation D41 is received but the execution of the deletion is still suspended. Thereafter, the management server 70 advances the process to step S65.

In step S65, the management server 70 verifies that the specified condition RC is met. Upon verifying that the specified condition RC is met, the management server 70 advances the process to step S66.

In step S66, the management server 70 generates a deletion command D42 for deleting the guest key information DKN indicating the guest key KN, which is the subject of the deletion reservation D41. Then, the management server 70 transmits the deletion command D42 to the third device 30C, which is a guest device 52.

Thereafter, upon receiving the deletion command D42, the guest device 52 executes the process of step S67. In step S67, the guest device 52 deletes the guest key information DKN in accordance with the deletion command D42. Then, the guest device 52 transmits, to the management server 70, a deletion completion notification M42 indicating that the deletion in accordance with the deletion command D42 has been completed.

Thereafter, upon receiving the completion notification M42, the management server 70 executes the process of step S68. In step S68, the management server 70 stores a history of the deletion of the guest key information DKN in the guest device 52. Thereafter, the management server 70 advances the process to step S69.

In step S69, the management server 70 generates a deletion command D43 for the authentication information AT. The deletion command D43 for the authentication information AT indicates a request to delete the authentication information AT for authenticating the guest key KN that is the subject of the deletion reservation D41. Then, the management server 70 transmits the deletion command D43 to the vehicle 20.

Thereafter, upon receiving the deletion command D43, the vehicle 20 executes the process of step S70. In step S70, in accordance with the deletion command D43, the vehicle 20 deletes the authentication information AT for authenticating the guest key KN, which is the subject of the deletion reservation D41. That is, the vehicle 20 deletes the authentication package ATP of the guest key KN. Thereafter, the vehicle 20 transmits, to the management server 70, a completion notification M43 indicating that the deletion of the authentication information AT in accordance with the deletion command D43 has been completed.

Thereafter, upon receiving the completion notification M43, the management server 70 executes the process of step S71. In step S71, the management server 70 stores a history of the deletion of the authentication information AT for authenticating the guest key KN to be deleted in the current series of deletion processes in the vehicle 20. Thereafter, the management server 70 advances the process to step S72.

In step S72, the management server 70 updates the database DB. Specifically, the management server 70 deletes the guest device 52 that has the guest key KN to be deleted in the current series of processes, from the data DA of the vehicle 20 in the database DB. Thereafter, the management server 70 transmits, to the friend device 51, a completion notification M44 indicating that a series of deletions of the guest key KN in accordance with the deletion reservation D41 has been completed.

Thereafter, upon receiving the completion notification M44, the friend device 51 executes the process of step S73. In step S73, the friend device 51 causes the HMI 32 to present information indicating that deletion of the guest key KN, which is the subject of the deletion reservation D41, has been completed. For example, the friend device 51 causes the HMI 32 to display an image indicating the completion of the deletion of the guest key KN. Thereafter, the management system 10 terminates the current series of processes for deleting the guest key KN.

### Deletion of the Guest Key KN due to Deletion in the Guest Device 52

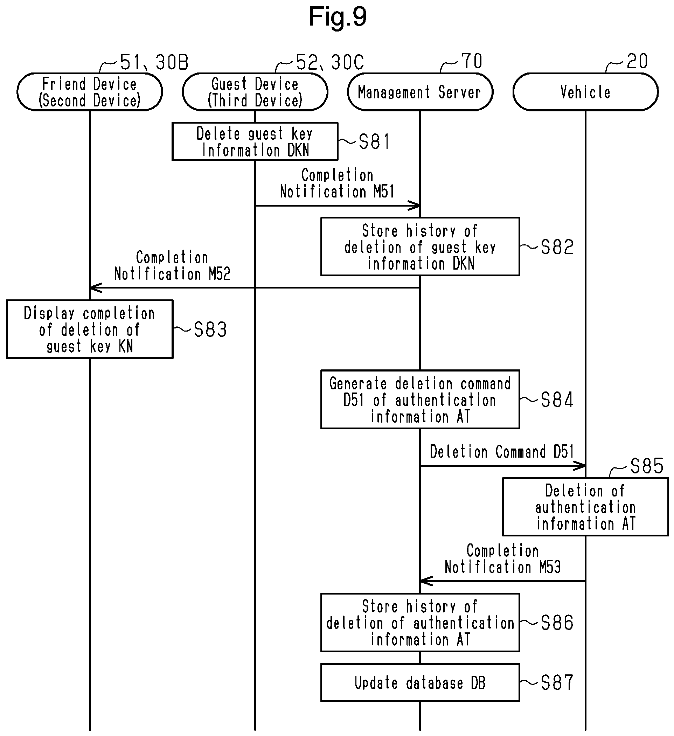

As shown in Fig. 9, the management system 10 executes a series of processes for deleting the guest key KN indicated by the guest key information DKN stored in the guest device 52 in response to a deletion operation on the guest device 52.

When a prescribed operation for requesting deletion of the guest key KN is performed on the third device 30C, which is the guest device 52, the guest device 52 first executes the process of step S81. In step S81, the guest device 52 deletes the guest key information DKN in accordance with a prescribed operation. Thereafter, the guest device 52 transmits, to the management server 70, a completion notification M51 indicating that the guest key information DKN has been deleted.

Thereafter, upon receiving the completion notification M51, the management server 70 executes the process of step S82. In step S82, the management server 70 stores a history of the deletion of the guest key information DKN in the guest device 52. Thereafter, the management server 70 transmits a completion notification M52 indicating that the guest key information DKN has been deleted to the second device 30B, which is the friend device 51.

Thereafter, upon receiving the completion notification M52, the friend device 51 executes the process of step S83. In step S83, the friend device 51 causes the HMI 32 to present information indicating that deletion of the guest key information DKN of the guest device 52 has been completed. For example, the friend device 51 causes the HMI 32 to display an image indicating the completion of the deletion of the guest key KN.

After the process of step S82, the management server 70 executes the process of step S84. In step S84, the management server 70 generates a deletion command D51 for deleting the authentication information AT for authenticating the guest key information DKN that has been deleted in step S81. Then, the management server 70 transmits the deletion command D51 to the vehicle 20.

Thereafter, upon receiving the deletion command D51, the vehicle 20 executes the process of step S85. In step S85, in accordance with the deletion command D51, the vehicle 20 deletes the authentication information AT for authenticating the guest key DKN that has been deleted in step S81. Then, the vehicle 20 transmits, to the management server 70, a completion notification M53 indicating that the deletion of the authentication information AT in accordance with the deletion command D51 has been completed.

Thereafter, upon receiving the completion notification M53, the management server 70 executes the process of step S86. In step S86, the management server 70 stores a history of the deletion of the authentication information AT for authenticating the guest key DKN that has been deleted in step S81. Thereafter, the management server 70 advances the process to step S87.

In step S87, the management server 70 updates the database DB. Specifically, the management server 70 deletes the guest device 52 that has the guest key KN to be deleted in the current series of processes, from the data DA of the vehicle 20 in the database DB. As a result, the management system 10 terminates the current series of processes for deleting the guest key KN.

### Deletion of Multiple Shareable Keys KS Based on Deletion Request D61

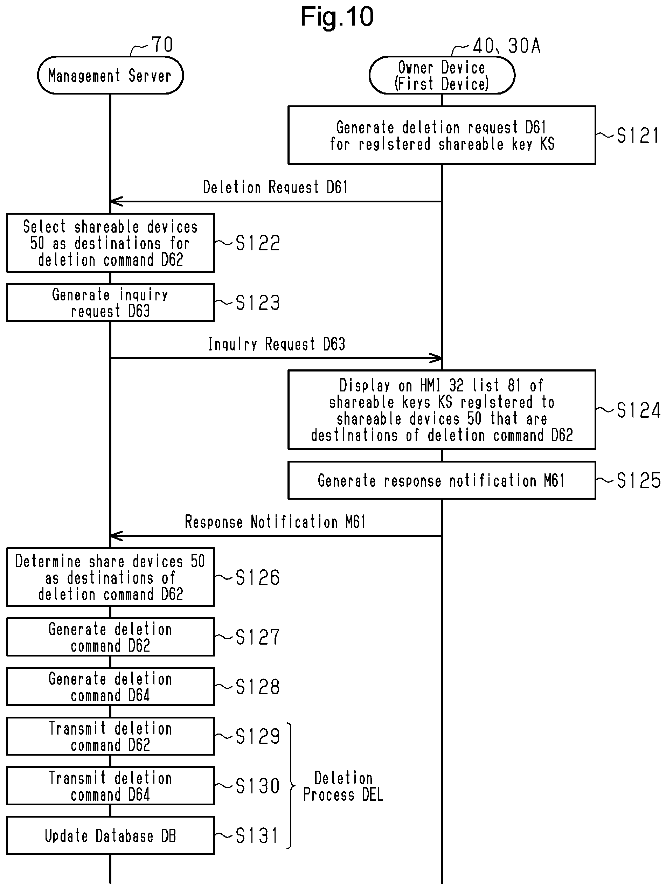

As shown in Fig. 10, the management system 10 executes a series of processes in a deletion process DEL for shareable keys KS based on a deletion request D61 from the first device 30A, which is the owner devices 40. In the series of processes shown in Fig. 10, the management system 10 deletes multiple shareable keys KS based on the deletion request D61.

When an operation of specifying and requesting deletion of a registered shareable key KS is executed in the owner device 40, the owner device 40 first executes the process of step S121. In step S121, the owner device 40 generates the deletion request D61 that specifies a registered shareable key KS. The deletion request D61 includes a signal for requesting deletion of the registered shareable keys KS and the digital key identification information ST3 indicating the registered shareable keys KS. The deletion request D61 includes the name information ATP5 that is information for identifying the owner device 40, which transmits the deletion request D61 to the management server 70. Then, the owner device 40 transmits the deletion request D61 to the management server 70. In the series of processes shown in Fig. 10, the deletion request D61 is a signal that requests the deletion of the second digital key K2.

Thereafter, upon receiving the deletion request D61 from the owner device 40, the management server 70 executes the process of step S122. In step S122, the management server 70 selects multiple shareable devices 50 as destinations for the deletion command D62. The deletion command D62 is a command for causing the shareable devices 50 to which the deletion command D62 is transmitted to delete the shareable key KS registered to the shareable devices 50. The transmission of the deletion command D62 is a step of the deletion process DEL.

The management server 70 selects a target shareable device 50T, to which the shareable key KS specified in the deletion request D61 is registered, as a shareable device 50 as the destination for the deletion command D62.

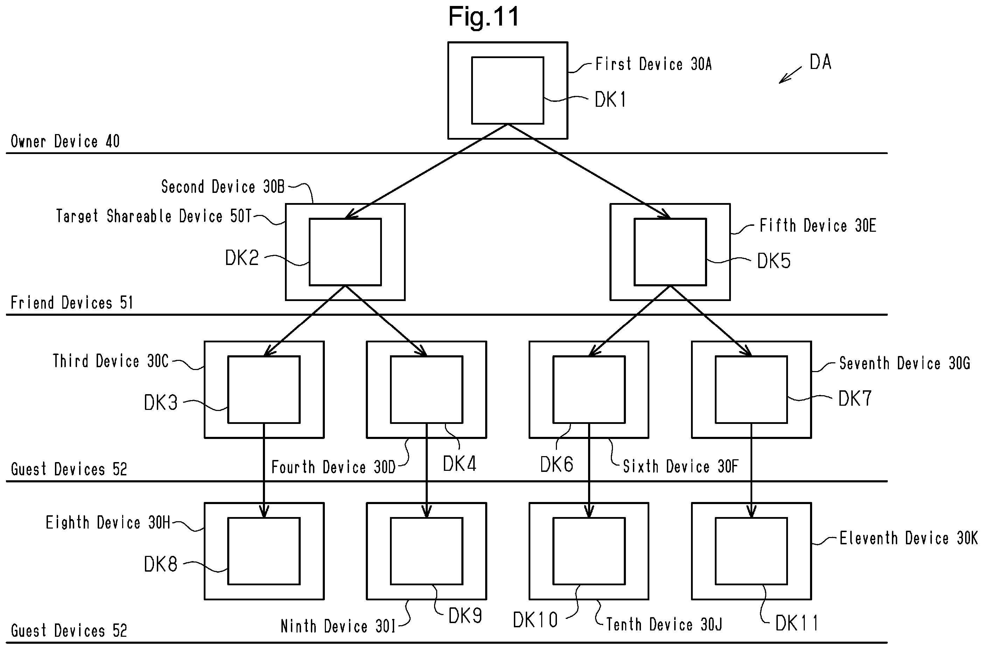

The shareable key KS specified in the deletion request D61 is the second digital key K2. The second digital key K2 is registered to the second device 30B. Accordingly, the second device 30B is the target shareable device 50T as shown in Fig. 11. The management server 70 selects the second device 30B, which is the target shareable device 50T, as the shareable device 50 to be a destination for the deletion command D62. Additionally, the management server 70 also selects, as the destination shareable devices 50 for the transmission of the deletion command D62, any shareable device 50 in which the shareable key KS registered is in a direct lineage relationship with the second digital key K2 registered to the second device 30B. The management server 70 references the data DA of the vehicle 20 stored in the database DB of the management server 70, thereby selecting the shareable devices 50 to which the shareable keys KS of the generations downstream in a direct lineage from the second digital key K2 are registered.

When receiving the deletion request D61 from a device 30 other than the owner device 40 or from the vehicle 20, the management server 70 selects only the target shareable device 50T as the destination for the deletion command D62. The following describes the shareable keys KS of the generations downstream in a direct lineage from the second digital key K2.

### Data DA of the Vehicle 20 Stored in the Database DB of the Management Server 70

Fig. 11 shows the data DA of one vehicle 20 stored in the database DB of the management server 70. A state will now be described in which digital keys are registered to eleven devices 30 for one vehicle 20. The eleven devices 30 are a first device 30A, a second device 30B, a third device 30C, a fourth device 30D, a fifth device 30E, a sixth device 30F, a seventh device 30G, an eighth device 30H, a ninth device 30I, a tenth device 30J, and an eleventh device 30K.

The digital key registered to the first device 30A is referred to as a first digital key K1. The storage device 37 of the first device 30A stores first key information DK1. The digital key registered to the second device 30B is referred to as a second digital key K2. The storage device 37 of the second device 30B stores second key information DK2. The digital key registered to the third device 30C is referred to as a third digital key K3. The storage device 37 of the third device 30C stores third key information DK3. The digital key registered to the fourth device 30D is referred to as a fourth digital key K4. The storage device 37 of the fourth device 30D stores fourth key information DK4. The digital key registered to the fifth device 30E is referred to as a fifth digital key K5. The storage device 37 of the fifth device 30E stores fifth key information DK5. The digital key registered to the sixth device 30F is referred to as a sixth digital key K6. The storage device 37 of the sixth device 30F stores sixth key information DK6. The digital key registered to the seventh device 30G is referred to as a seventh digital key K7. The storage device 37 of the seventh device 30G stores seventh key information DK7. The digital key registered to the eighth device 30H is referred to as an eighth digital key K8. The storage device 37 of the eighth device 30H stores eighth key information DK8. The digital key registered to the ninth device 30I is referred to as a ninth digital key K9. The storage device 37 of the ninth device 30I stores ninth key information DK9. A digital key registered to the tenth device 30J is referred to as a tenth digital key K10. The storage device 37 of the tenth device 30J stores tenth key information DK10. The digital key registered to the eleventh device 30K is referred to as an eleventh digital key K11. The storage device 37 of the eleventh device 30K stores the eleventh key information DK11.

### Types of Digital Keys

In the data DA, the device 30 to which the type of digital key is registered as the owner key KO is the first device 30A. In other words, the first device 30A is the owner device 40. Accordingly, the first digital key K1 is the owner key KO.

In the data DA, the devices 30 for which the type of registered digital keys is the shareable key KS are the second device 30B, the third device 30C, the fourth device 30D, the fifth device 30E, the sixth device 30F, the seventh device 30G, the eighth device 30H, the ninth device 30I, the tenth device 30J, and the eleventh device K. In other words, the second device 30B, the third device 30C, the fourth device 30D, the fifth device 30E, the sixth device 30F, the seventh device 30G, the eighth device 30H, the ninth device 30I, the tenth device 30J, and the eleventh device 30K are shareable devices 50.

The second digital key K2, the third digital key K3, the fourth digital key K4, the fifth digital key K5, the sixth digital key K6, the seventh digital key K7, the eighth digital key K8, the ninth digital key K9, the tenth digital key K10, and the eleventh digital key K11 are all shareable keys KS.

The second key information DK2, the third key information DK3, the fourth key information DK4, the fifth key information DK5, the sixth key information DK6, the seventh key information DK7, the eighth key information DK8, the ninth key information DK9, the tenth key information DK10, and the eleventh key information DK11 are all shareable key information DKS. Specifically, in the data DA, the devices 30 for which the type of digital key is registered as the friend key KF are the second device 30B and the fifth device 30E. That is, the second device 30B and the fifth device 30E are friend devices 51. In the data DA, the devices 30 for which the type of registered digital keys the guest key KN are the third device 30C, the fourth device 30D, the sixth device 30F, the seventh device 30G, the eighth device 30H, the ninth device 30I, the tenth device 30J, and the eleventh device 30K. In other words, the third device 30C, the fourth device 30D, the sixth device 30F, the seventh device 30G, the eighth device 30H, the ninth device 30I, the tenth device 30J, and the eleventh device 30K are the guest devices 52.

### Relationship Among the Devices 30

In the data DA, the relationship between the second device 30B and the first device 30A is such that the friend key KF has been registered to the second device 30B based on a registration request from the first device 30A. In other words, the second digital key K2 is registered based on the first digital key K1. In this case, the second digital key K2 is a digital key that is one generation downstream in a direct lineage from the first digital key K1.

In the data DA, the relationship between the fifth device 30E and the first device 30A is such that the friend key KF is registered to the fifth device 30E based on a registration request from the first device 30A. That is, the fifth digital key K5 is registered based on the first digital key K1. In this case, the fifth digital key K5 is a digital key that is one generation downstream in a direct lineage from the first digital key K1.

In the data DA, the relationship between the third device 30C and the second device 30B is such that the guest key KN has been registered to the third device 30C based on a registration request from the second device 30B. In other words, the third digital key K3 is registered based on the second digital key K2. In this case, the third digital key K3 is a digital key that is one generation downstream in a direct lineage from the second digital key K2. The third digital key K3 is a digital key that is two generations downstream in a direct lineage from the first digital key K1.

In the data DA, the relationship between the fourth device 30D and the second device 30B is such that the guest key KN has been registered to the fourth device 30D based on a registration request from the second device 30B. In other words, the fourth digital key K4 is registered based on the second digital key K2. In this case, the fourth digital key K4 is a digital key that is one generation downstream in a direct lineage from the second digital key K2. The fourth digital key K4 is a digital key that is two generations downstream in a direct lineage from the first digital key K1.

In the data DA, the relationship between the sixth device 30F and the fifth device 30E is such that the guest key KN has been registered to the sixth device 30F based on a registration request from the fifth device 30E. In other words, the sixth digital key K6 is registered based on the fifth digital key K5. In this case, the sixth digital key K6 is a digital key that is one generation downstream in a direct lineage from the fifth digital key K5. The sixth digital key K6 is a digital key that is two generations downstream in a direct lineage from the first digital key K1.

In the data DA, the relationship between the seventh device 30G and the fifth device 30E is such that the guest key KN has been registered to the seventh device 30G based on a registration request from the fifth device 30E. In other words, the seventh digital key K7 is registered based on the fifth digital key K5. In this case, the seventh digital key K7 is a digital key that is one generation downstream in a direct lineage from the fifth digital key K5. The seventh digital key K7 is a digital key that is two generations downstream in a direct lineage from the first digital key K1.

In the data DA, the relationship between the eighth device 30H and the third device 30C is such that the guest key KN has been registered to the eighth device 30H based on a registration request from the third device 30C. That is, the eighth digital key K8 is registered based on the third digital key K3. In this case, the eighth digital key K8 is a digital key that is one generation downstream in a direct lineage from the third digital key K3. The eighth digital key K8 is a digital key that is two generations downstream in a direct lineage from the second digital key K2. The eighth digital key K8 is a digital key that is three generations downstream in a direct lineage from the first digital key K1.

In the data DA, the relationship between the ninth device 30I and the fourth device 30D is such that the guest key KN has been registered to the ninth device 30I based on a registration request from the fourth device 30D. In other words, the ninth digital key K9 is registered based on the fourth digital key K4. In this case, the ninth digital key K9 is a digital key that is one generation downstream in a direct lineage from the fourth digital key K4. The ninth digital key K9 is a digital key that is two generations downstream in a direct lineage from the second digital key K2. The ninth digital key K9 is a digital key that is three generations downstream in a direct lineage from the first digital key K1.

In the data DA, the relationship between the tenth device 30J and the sixth device 30F is such that the guest key KN has been registered to the tenth device 30J based on a registration request from the sixth device 30F. In other words, the tenth digital key K10 is registered based on the sixth digital key K6. In this case, the tenth digital key K10 is a digital key that is one generation downstream in a direct lineage from the sixth digital key K6. The tenth digital key K10 is a digital key that is two generations downstream in a direct lineage from the fifth digital key K5. The tenth digital key K10 is a digital key that is three generations downstream in a direct lineage from the first digital key K1.

In the data DA, the relationship between the eleventh device 30K and the seventh device 30G is such that the guest key KN has been registered to the eleventh device 30K based on a registration request from the seventh device 30G. That is, the eleventh digital key K11 is registered based on the seventh digital key K7. In this case, the eleventh digital key K11 is a digital key that is one generation downstream in a direct lineage from the seventh digital key K7. The eleventh digital key K11 is a digital key that is two generations downstream in a direct lineage from the fifth digital key K5. The eleventh digital key K11 is a digital key that is three generations downstream in a direct lineage from the first digital key K1.

### Digital Keys in Direct Lineage Relationship

Digital keys that are one or more generations downstream from a digital key that has been registered based on a request from the first digital key K1 are all digital keys in a direct lineage relationship with the first digital key K1. That is, in the relational diagram shown in Fig. 11, the digital keys other than the first digital key K1 are each a digital key that is one or more generations downstream in a direct lineage from the first digital key K1.

Digital keys that are one or more generations downstream from a digital key that has been registered based on a request from the second digital key K2 are all digital keys in a direct lineage relationship with the second digital key K2. That is, in the relational diagram shown in Fig. 11, the third digital key K3, the fourth digital key K4, the eighth digital key K8, and the ninth digital key K9 are each a digital key that is one or more generations downstream in a direct lineage from the second digital key K2.

The shareable keys KS that are one or more generations downstream in a direct lineage from the second digital key K2 are registered to some of the shareable devices 50. The management server 70 selects such shareable devices 50, among the shareable devices 50, as destinations for the deletion command D62. Specifically, the management server 70 selects the second device 30B, the third device 30C, the fourth device 30D, the eighth device 30H, and the ninth device 30I as the destinations for the deletion command D62. The shareable keys KS registered to the shareable devices 50 that are the destinations for the deletion command D62 are shareable keys KS that are subject to the deletion process DEL.

The third digital key K3 and the fourth digital key K4, which are registered based on requests from the target shareable device 50T, belong to the first generation with reference to the target shareable device 50T. The shareable key KS is registered to the third device 30C and the fourth device 30D based on request from the target shareable device 50T. The eighth digital key K8 and the ninth digital key K9, which are respectively registered based on requests from the third device 30C and the fourth device 30D belong to the second generation with reference to the target shareable device 50T. The deletion process DEL involves deleting the shareable keys KS of the first and subsequent generations downstream in a direct lineage from the shareable key KS registered to the target shareable device 50T.

### Shareable Key KS Designated as Key to be Protected

The management system 10 is configured to designate each shareable key KS as a key to be protected. The management server 70 does not select, as a destination for the deletion command D62, any shareable device 50 to which the shareable key KS designated as a key to be protected is registered. In other words, the management server 70 does not execute the deletion process DEL on any shareable key KS that is designated as a key to be protected.

For example, the user of the vehicle 20 can designate each of the shareable keys KS as a key to be protected via the HMI 22 of the vehicle 20. For example, the user of the owner device 40 can designate each of the shareable keys KS as a key to be protected via the HMI 32 of the owner device 40. Further, the user of a shareable device 50 can designate each of the shareable keys KS as a key to be protected via the HMI 32 of the shareable device 50.

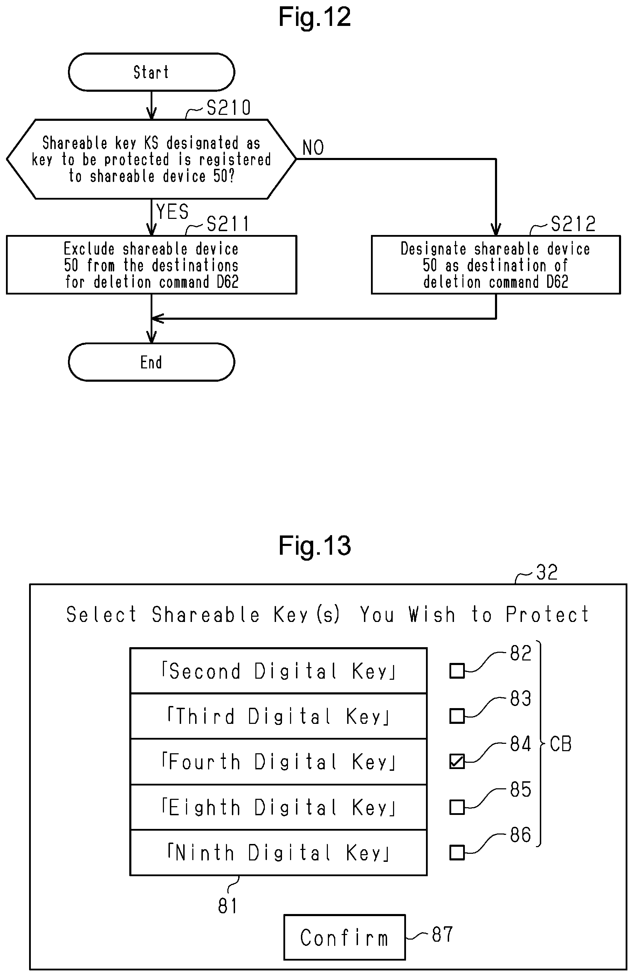

After selecting multiple shareable devices 50 as destinations for the deletion command D62, the management server 70 executes the process shown in Fig. 12 to determine whether a shareable key KS designated as a key to be protected is registered to each of the selected shareable devices 50.

In step S210 shown in Fig. 12, the management server 70 determines whether a shareable key KS designated as a key to be protected is registered to each of the shareable device 50 selected as a destination for the deletion command D62.

If it is determined that a shareable key KS designated as a key to be protected is registered to any of the shareable devices 50 selected as the destinations for the deletion command D62 (step S210: YES), the management server 70 advances the process to step S211. In step S211, the management server 70 excludes the shareable device 50 to which the shareable key KS designated as a key to be protected is registered from the destinations for the deletion command D62. Thereafter, the management server 70 terminates the series of processes shown in Fig. 12.

If it is determined that a shareable key KS designated as a key to be protected is not registered to any of the shareable devices 50 selected as the destinations for the deletion command D62 (step S210: NO), the management server 70 advances the process to step S212. In step S212, the management server 70 keeps the shareable devices 50 as selected as the destinations for the deletion command D62. Thereafter, the management server 70 terminates the series of processes shown in Fig. 12.

The management server 70 executes the process shown in Fig. 12 once for each of all the shareable devices 50 selected as the destinations for the deletion command D62, and then advances the process to step S123 shown in Fig. 10.

### Generation and Transmission of Inquiry Request D63

In step S123, the management server 70 generates an inquiry request D63. The inquiry request D63 is a request for specifying a shareable key KS to be designated as a key to be protected. The inquiry request D63 includes a list 81 of multiple shareable keys KS that are subject to the deletion process DEL. Specifically, the inquiry request D63 includes the list 81 of multiple shareable keys KS that are registered to the shareable devices 50 that are the destinations for the deletion command D62 shown in Fig. 13. The inquiry request D63 includes a request to specify the shareable key KS to be designated as a key to be protected among the shareable keys KS listed in the list 81. The inquiry request D63 also includes the digital key identification information ST3 corresponding to each of the shareable keys KS listed in the list 81. The management server 70 transmits the inquiry request D63 to the owner device 40, which is the source of the deletion request D61.

Thereafter, upon receiving the inquiry request D63, the owner device 40 executes the process of step S124 shown in Fig. 10. In step S124, as shown in Fig. 13, the owner device 40 displays on the HMI 32 the list 81 and an image prompting the user to identify the shareable key KS to be designated as the key to be protected from among the shareable keys KS listed in the list 81.

Fig. 13 shows an example of the image displayed on the HMI 32 of the owner device 40, including the list 81 and the image prompting the user to identify the shareable key KS to be designated as the key to be protected from among the shareable keys KS listed in the list 81.

The user of the owner device 40 selects the shareable key KS to be designated as the key to be protected in accordance with the guidance displayed on the HMI 32. Specifically, the user places a checkmark in the checkbox CB located next to the shareable key KS to be designated as the key to be protected from among the shareable keys KS listed in the list 81 displayed on the HMI 32. When the user wishes to designate the second digital key K2 as the key to be protected, the user places a checkmark in a first checkbox 82. When the user wishes to designate the third digital key K3 as the key to be protected, the user places a checkmark in a second checkbox 83. When the user wishes to designate the fourth digital key K4 as the key to be protected, the user places a checkmark in a third checkbox 84. When the user wishes to designate the eighth digital key K8 as the key to be protected, the user places a checkmark in a fourth checkbox 85. When the user wishes to designate the ninth digital key K9 as the key to be protected, the user places a checkmark in a fifth checkbox 86.

When the user presses the "Confirm" button, the shareable key KS corresponding to the checkbox CB that has been checked is selected as the shareable key KS to be designated as the key to be protected. Subsequently, the owner device 40 advances the process to step S125 shown in Fig. 10. The following describes a case in which the fourth digital key K4 is selected as the key to be protected by the user of the owner device 40 checking the third checkbox 84.

In step S125, the owner device 40 generates a response notification M61. The response notification M61 includes the digital key identification information ST3 indicating the shareable key KS selected as a key to be protected by the user of the owner device 40 at step S124. Specifically, the response notification M61 includes the digital key identification information ST3 that indicates the fourth digital key K4. Subsequently, the owner device 40 transmits the response notification M61 to the management server 70.

Thereafter, when receiving the response notification M61, the management server 70 executes the process of step S126. In step S126, the management server 70 designates the fourth digital key K4 as a key to be protected based on the digital key identification information ST3 included in the response notification M61. The management server 70 excludes, from the destinations for the deletion command D62, the fourth device 30D to which the fourth digital key K4, which is designated as a key to be protected, is registered. Thereafter, among the shareable devices 50 selected as destinations for the deletion command D62 in step S122, the management server 70 determines shareable devices 50 other than the fourth device 30D as destinations for the deletion command D62. Specifically, the management server 70 determines the second device 30B, the third device 30C, the eighth device 30H, and the ninth device 30I as the destinations for the deletion command D62. Thereafter, the management server 70 advances the process to step S127.

### Generation of the Deletion Command D62

In step S127, the management server 70 generates the deletion command D62 to be transmitted to the second device 30B, the third device 30C, the eighth device 30H, and the ninth device 30I. Thereafter, the management server 70 advances the process to step S128.

### Generation of Deletion Command D64

In step S128, the management server 70 generates a deletion command D64 for deleting multiple pieces of the authentication information AT, which indicates the shareable key KS specified in the deletion request D61 and the shareable keys KS of generations downstream in a direct lineage from the specified shareable key KS. Specifically, the deletion command D64 includes information for deleting the authentication information AT indicating the second digital key K2, which is specified in the deletion request D61, the authentication information AT indicating the third digital key K3, the authentication information AT indicating the eighth digital key K8, and the authentication information AT indicating the ninth digital key K9. The third digital key K3, the eighth digital key K8, and the ninth digital key K9 are shareable keys KS of generations downstream in a direct lineage from the second digital key K2. The deletion command D64 does not include information for deleting the authentication information AT indicating the digital key designated to be protected. Specifically, the deletion command D64 does not include information for deleting the authentication information AT indicating the fourth digital key K4. After generating the deletion command D64, the management server 70 advances the process to step S129.

The authentication information AT is information indicating digital keys. Therefore, the deletion command D64 is a command to delete shareable keys KS of generations downstream in a direct lineage from the shareable key KS registered to the target shareable device 50T.

### Transmission of the Deletion Command D62

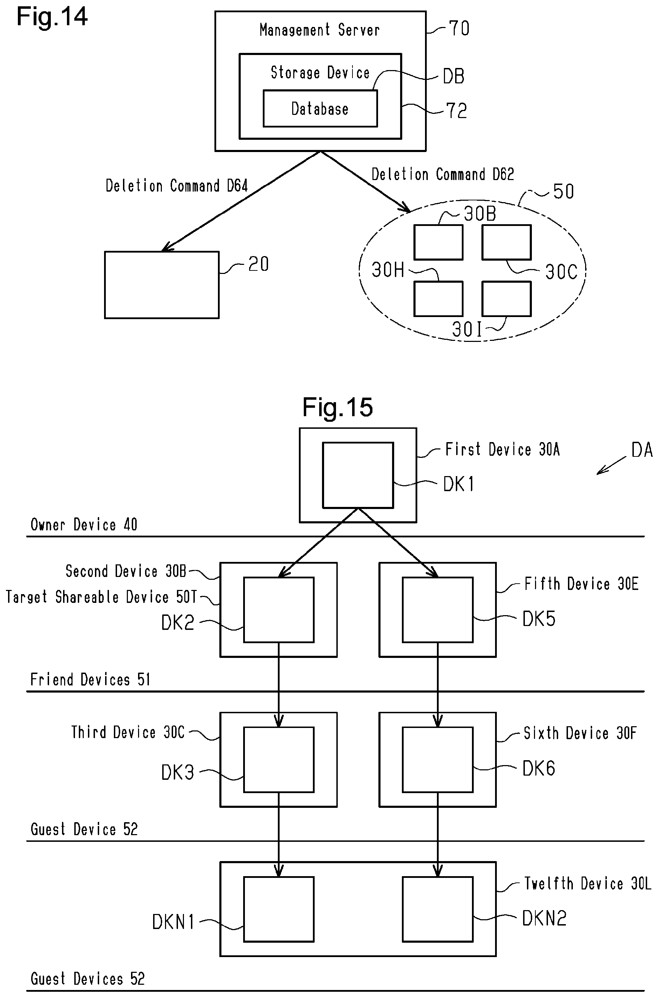

In step S129, as shown in Fig. 14, the management server 70 transmits the deletion command D62 to the second device 30B, the third device 30C, the eighth device 30H, and the ninth device 30I, as part of the deletion process DEL.

Thereafter, upon receiving the deletion command D62, the shareable devices 50 each delete the registered shareable key KS in accordance with the deletion command D62. Specifically, upon receiving the deletion command D62, the second device 30B deletes the second key information DK2 stored in the storage device 37 of the second device 30B. Upon receiving the deletion command D62, the third device 30C deletes the third key information DK3 stored in the storage device 37 of the third device 30C. Upon receiving the deletion command D62, the eighth device 30H deletes the eighth key information DK8 stored in the storage device 37 of the eighth device 30H. Upon receiving the deletion command D62, the ninth device 30I deletes the ninth key information DK9 stored in the storage device 37 of the ninth device 30I. Subsequently, each shareable device 50 transmits a deletion completion notification indicating that the deletion of the key information DK is completed to the management server 70.

Upon receiving the deletion completion notifications, the management server 70 stores a history of the deletion of the key information DK in the respective shareable devices 50. Thereafter, the management server 70 advances the process to step S130 shown in Fig. 10.

### Transmission of the Deletion Command D64

In step S130, as shown in Fig. 14, the management server 70 transmits the deletion command D64 to the vehicle 20, as part of the deletion process DEL. Upon receiving the deletion command D64, the vehicle 20 deletes multiple pieces of the authentication information AT in accordance with the deletion command D64. The vehicle 20 then transmits, to the management server 70, a notification indicating that the deletion of the multiple pieces of the authentication information AT has been completed. Upon receiving the notification of the completed deletion, the management server 70 stores a history of the deletion of the multiple pieces of the authentication information AT in the vehicle 20. Thereafter, the management server 70 advances the process to step S131 shown in Fig. 10.

### Update of the Database DB

In step S131, as shown in Fig. 14, the management server 70 updates the database DB, as part of the deletion process DEL. Specifically, the management server 70 deletes, from the data DA of the vehicle 20, information indicating the shareable device 50 to which the shareable key KS specified in the deletion request D61 is registered, and information indicating the shareable devices 50 to which shareable keys KS of generations downstream in a direct lineage from the specified shareable key KS are registered. More specifically, the management server 70 deletes, from the data DA of the vehicle 20, information indicating the second device 30B, to which the second digital key K2 specified in the deletion request D61 is registered, and information indicating multiple shareable devices 50 to which shareable keys KS of generations downstream in a direct lineage from the second digital key K2 are registered, including: information indicating the third device 30C, to which the third digital key K3 is registered, information indicating the eighth device 30H, to which the eighth digital key K8 is registered, and information indicating the ninth device 30I, to which the ninth digital key K9 is registered. The management server 70 does not delete, from the data DA of the vehicle 20, the information indicating the shareable device 50 to which the digital key to be protected is registered. Specifically, the management server 70 does not delete, from the data DA of the vehicle 20, the information indicating the fourth device 30D, to which the fourth digital key K4 is registered. The management system 10 then terminates the series of processes for deleting multiple shareable keys KS based on the deletion request D61.

### Operation of the Present Embodiment

The user who has transmitted the deletion request D61 is highly likely to wish to delete not only the shareable key KS registered to the target shareable device 50T but also the shareable keys KS registered based on the request from the target shareable device 50T. When receiving the deletion request D61, the management server 70 transmits the deletion command D62 to the second device 30B, which is the target shareable device 50T, as part of the deletion process DEL. Further, as part of the deletion process DEL, the management server 70 transmits the deletion command D62 to the third device 30C, the eighth device 30H, and the ninth device 30I, which are other shareable devices 50 to which the shareable keys KS have been registered based on requests from the target shareable device 50T.

Further, the above-described management server 70 transmits the deletion command D64 to the vehicle 20, as part of the deletion process DEL. In addition, the management server 70 updates the data DA of the vehicle 20 in the database DB, as part of the deletion process DEL.

### Advantages of the Present Embodiment

(1) According to the above-described management server 70, it is possible to collectively delete multiple digital keys without the need for the user to individually select the digital keys they wish to delete. This reduces the burden on the user involved in deleting multiple digital keys is reduced.
(2) The management server 70 transmits the deletion command D62 to the shareable devices 50 that include shareable keys KS of generations downstream in a direct lineage from the shareable key KS registered to the target shareable device 50T. The user who transmitted the deletion request D61 is highly likely to wish to delete the shareable keys KS from shareable devices 50 that include shareable key KS of generations downstream in a direct lineage from the shareable key KS registered to the target shareable device 50T. The management server 70 transmits the deletion command D62 to the shareable devices 50 that include shareable keys KS of generations downstream in a direct lineage from the second digital key K2 registered to the second device 30B, which is the target shareable device 50T. This further reduces the burden on the user who wishes to delete multiple shareable keys KS.
(3) The above-described management server 70 is configured to designate a shareable key KS as a key to be protected. The management server 70 does not transmit the deletion command D62 to the shareable devices 50 to which the shareable key KS designated as a key to be protected is registered. In other words, the management server 70 does not execute the deletion process DEL on any shareable key KS that is designated as a key to be protected. The user who has transmitted the deletion request D61 may not wish to delete shareable keys KS that have been registered to other shareable devices 50 based on requests from the target shareable device 50T. By designating a shareable key KS as a key to be protected, the above-described management server 70 is capable of protecting the shareable key KS from being affected by the deletion command D62.
(4) When receiving the deletion request D61, the management server 70 transmits the list 81 of the shareable keys KS registered to the multiple shareable devices 50, which are destinations for the deletion command D62 illustrated in Fig. 13, to the owner device 40, which is the source of the deletion request D61. The list 81 is a list of multiple shareable keys KS that are subject to the deletion process DEL. Accordingly, the management server 70 informs the user who has transmitted the deletion request D61 of the shareable keys KS to be deleted.
(5) When receiving the deletion request D61, the management server 70 prompts the user who has transmitted the deletion request D61 to specify a shareable key KS to be protected from among the shareable keys KS listed in the list 81 illustrated in Fig. 13. Accordingly, the management server 70 is capable of determining the shareable devices 50 that are the destinations for the deletion command D62 by reflecting the intention of the user who has specified the shareable key KS they wish to protect from the deletion command D62.
(6) Only when receiving the deletion request D61 from the owner device 40, the above-described management server 70 transmits the deletion command D62, as part of the deletion process DEL, to the second device 30B, which is the target shareable device 50T, and other shareable devices 50 to which the shareable keys KS have been registered based on requests from the second device 30B. If multiple shareable keys KS are unlimitedly deleted by users other than the user of the owner device 40, there is a possibility that the operation of the vehicle 20 using the digital keys is hindered. The above-described management server 70 transmits the deletion request D61 to the shareable devices 50 only when receiving the deletion command D62 from the owner device 40. The management server 70 suppresses the unauthorized use of the function for deleting multiple shareable keys KS based on a single deletion request D61 by a user other than the user of the owner device 40.
(7) The management system 10 includes the vehicle 20, multiple digital keys, and the management server 70. The digital keys include the owner keys KO registered to the owner device 40, which is a device 40BO belonging to the owner of the vehicle 20, and the shareable keys KS registered to the shareable devices 50, which are devices 30 different from the owner device 40. The management server 70 manages these digital keys. When receiving the deletion request D61 specifying registered shareable keys KS, the management server 70 executes the deletion process DEL to delete the shareable key KS registered to the target shareable device 50T, to which the shareable key KS specified in the received deletion request D61 is registered, and other shareable devices 50 to which shareable keys KS have been registered based on requests from the target shareable device 50T. The above-described management system 10 is capable of collectively deleting multiple digital keys without the need for the user to individually select the digital keys they wish to delete. Therefore, the above-described management system 10 reduces the burden on the users in the process of deleting multiple digital keys.
(8) The management server 70 manages multiple digital keys that are available for the vehicle 20. The digital keys include the owner key KO and the shareable keys KS. The owner key KO is registered to the owner device 40, which is the device 30 belonging to the owner of the vehicle 20. The shareable key KS are registered to the shareable devices 50, which are the devices 30 different from the owner device 40. The management server 70 includes the execution device 71, which is processing circuitry. The digital key deletion method executed by the management server 70 includes a step (step S127) in which the execution device 71 of the management server 70 generates the deletion command D62 when receiving the deletion request D61, which specifies a registered shareable key KS. The deletion command D62 is a command to delete the specified shareable key KS. The digital key deletion method executed by the management server 70 includes a step (step S128) of generating the deletion command D64, which is a command to delete shareable keys KS of generations downstream in a direct lineage from the shareable key KS specified in the received deletion request D61. The digital key deletion method executed by the management server 70 includes steps (step S129, step S130, and step S131) in which the execution device 71 of the management server 70 executes the deletion process DEL of deleting the shareable key KS registered to the second device 30B, which is the target shareable device 50T to which the shareable key KS specified in the received deletion request D61 is registered, and other shareable devices 50 to which the shareable keys KS have been registered based on requests from the second device 30B. By executing the digital key deletion method, the management server 70 is capable of collectively deleting multiple digital keys without the need for the user to individually select digital keys they wish to delete. This reduces the burden on the user involved in deleting multiple digital keys is reduced.
(9) The storage device 72 of the management server 70 stores the deletion program PM, which causes the execution device 71 of the management server 70 to execute processes. When the management server 70 receives the deletion request D61 specifying a registered shareable key KS, the deletion program PM causes the execution device 71 of the management server 70 to execute a process of generating the deletion command D62 that is a command to delete the specified shareable key KS. The deletion program PM causes the execution device 71 of the management server 70 to execute the process of generating the deletion command D64, which is a command to delete shareable keys KS of generations downstream in a direct lineage from the shareable key KS specified in the received deletion request D61. The deletion program PM causes the execution device 71 of the management server 70 to execute the deletion process DEL of deleting shareable keys KS. Specifically, the execution device 71 deletes the shareable key KS registered to the second device 30B and shareable keys KS that have been registered to other shareable device 50 based on requests from the second device 30B. The second device 30B is the target shareable device 50T to which the shareable key KS specified in the received deletion request D61 is registered. This allows the management server 70 to delete multiple digital keys collectively without the need for the user to individually select digital keys they wish to delete. This reduces the burden on the user involved in deleting multiple digital keys is reduced.

### Modifications

The above-described embodiment may be modified as follows. The above-described embodiment and the following modifications can be combined if the combined modifications remain technically consistent with each other.

### Deletion Process DEL

In step S129, the management server 70 executes a process of transmitting the deletion command D62 to multiple shareable devices 50, as part of the deletion process DEL. In step S130, the management server 70 executes a process of transmitting the deletion command D64 to the vehicle 20, as part of the deletion process DEL. In step S131, the management server 70 executes a process of updating the database DB stored in the management server 70, as part of the deletion process DEL. It is sufficient that the management server 70 be configured to execute one or more of these three processes, as part of the deletion process DEL. For example, the management server 70 may execute only the process of transmitting the deletion command D62 to the shareable devices 50, as part of the deletion process DEL. The management server 70 may execute only the process of transmitting the deletion command D64 to the vehicle 20 as part of the deletion process DEL. The management server 70 may execute only the process of updating the database DB stored in the management server 70 as part of the deletion process DEL.

The management server 70 is capable of deleting multiple digital keys collectively without the need for the user to individually select the digital keys they wish to delete. This is accomplished by executing one of the processes in step S129, step S130, or step S131. This reduces the burden on the user involved in deleting multiple digital keys is reduced.

When the management server 70 does not execute the process of step S129, the management server 70 does not necessarily need to execute the process of step S126 and the process of step S127. When the management server 70 does not execute the process of step S130, the management server 70 does not necessarily need to execute the process of step S128.

In a case in which the management server 70 does not execute the process of step S129, it is sufficient that the management server 70 select, as a process corresponding to step S122, shareable keys KS of generations downstream in a direct lineage from the shareable key KS registered to the target shareable device 50T. That is, as a process corresponding to step S122, the management server 70 does not necessarily need to select the shareable devices 50 that include the shareable keys KS of the generations downstream in a direct lineage from the shareable key KS registered to the target shareable device 50T.

The list 81 is not limited to a list of multiple shareable keys KS registered to the shareable devices 50 that are destinations for the deletion command D62. The list 81 may include multiple shareable keys KS that are subject to the deletion process DEL. For example, the list 81 may be modified as long as it contains shareable keys KS of generations downstream in a direct lineage from the shareable key KS registered to the target shareable device 50T.

### Source of the Deletion Request D61

The source of the deletion request D61 is not limited to the owner device 40. For example, the source of the deletion request D61 may be the vehicle 20. Alternatively, the source of the deletion request D61 may be the shareable device 50.

When the management server 70 receives the deletion request D61 from a shareable device 50, the shareable key KS specified in the received deletion request D61 may be in a direct lineage with the shareable key KS registered to the shareable device 50 that is the source of the deletion request D61. Also, the shareable key KS specified in the received deletion request D61 may be a shareable key KS of a generation downstream of the shareable key KS registered to the shareable device 50 that is the source of the deletion request D61. In this case, the management server 70 may be configured to execute the deletion process DEL to delete the shareable key KS that is registered to the target shareable device 50T and specified in the received deletion request D61. The management server 70 may further delete the shareable key KS registered to another shareable device 50 to which the shareable key KS is registered based on a request from the target shareable device 50T.

As shown in Fig. 11, the third digital key K3 registered to the third device 30C and the eighth digital key K8 registered to the eighth device 30H are shareable keys KS in a direct lineage from the second digital key K2 registered to the second device 30B. The third digital key K3 and the eighth digital key K8 are digital keys of generations downstream of the second digital key K2. In a case in which the management server 70 receives the deletion request D61 from the second device 30B, if the shareable key KS specified in the deletion request D61 is the third digital key K3, the management server 70 selects the third device 30C and the eighth device 30H as the shareable devices 50 to which the deletion command D62, which is part of the deletion process DEL, is to be transmitted, in a process corresponding to step S122 shown in Fig. 10. Thereafter, in the process corresponding to step S129, the management server 70 transmits the deletion command D62, which is part of the deletion process DEL, to the third device 30C and the eighth device 30H. As a process corresponding to step S128, the management server 70 generates the deletion command D64 including information for deleting the authentication information AT indicating the third digital key K3 and the authentication information AT indicating the eighth digital key K8. The management server 70 transmits the deletion command D64 to the vehicle 20, as a process corresponding to step S130. As a process corresponding to step S131, the management server 70 deletes, from the data DA of the vehicle 20, information indicating the third device 30C to which the third digital key K3 is registered and information indicating the eighth device 30H to which the eighth digital key K8 is registered.

As shown in Fig. 11, the fifth device 30E is a shareable device 50 that is not in a direct lineage from the second device 30B. In a case in which the management server 70 receives the deletion request D61 from the second device 30B, if the fifth digital key K5 has been specified in the deletion request D61, the management server 70 does not select the fifth device 30E as the shareable device 50 that transmits to which the deletion command D62 is transmitted in a process corresponding to step S122 shown in Fig. 10. Thereafter, the management server 70 does not generate the deletion command D62 in a process corresponding to step S127. The management server 70 does not generate the deletion command D64 in a process corresponding to step S128. The management server 70 does not transmit the deletion command D62 toward the shareable device 50 in a process corresponding to step S129. The management server 70 does not transmit the deletion command D64 toward the vehicle 20 in a process corresponding to step S130. The management server 70 does not update the database DB in a process corresponding to step S131. That is, the management server 70 does not execute the deletion process DEL.

As shown in Fig. 11, the sixth device 30F is a shareable device 50 that is not in a direct lineage from the fifth device 30E. The fifth device 30E is a digital key of a generation preceding the sixth device 30F. In a case in which the management server 70 receives the deletion request D61 from the sixth device 30F, if the fifth digital key K5 has been specified in the deletion request D61, the management server 70 does not select the fifth device 30E as the shareable device 50 that transmits to which the deletion command D62 is transmitted in a process corresponding to step S122 shown in Fig. 10. Thereafter, the management server 70 does not generate the deletion command D62 in a process corresponding to step S127. The management server 70 does not generate the deletion command D64 in a process corresponding to step S128. The management server 70 does not transmit the deletion command D62 toward the shareable device 50 in a process corresponding to step S129. The management server 70 does not transmit the deletion command D64 toward the vehicle 20 in a process corresponding to step S130. The management server 70 does not update the database DB in a process corresponding to step S131. That is, the management server 70 does not execute the deletion process DEL.

When the user of a shareable device 50 deletes a shareable key KS that is not in a direct lineage from the shareable key KS registered to the shareable device 50, the use of the vehicle 20 using the digital key may be hindered. Similarly, when the user of a shareable device 50 deletes the shareable key KS of a generation upstream of the shareable key KS registered to the shareable device 50, the use of the vehicle 20 using the digital key may be hindered.

The above-described management server 70 prevents unauthorized use of the function of deleting multiple shareable keys KS based on a single deletion request D61 by a user of a shareable device 50. This reduces the possibility of a problem in the use of the vehicles 20 using digital keys.

### Case in Which Multiple Digital Keys are Registered to a Single Shareable Device 50

In the management system 10, a situation may occur in which multiple digital keys are registered to a single shareable device 50. Fig. 15 shows data DA of one vehicle 20 stored in the database DB of the management server 70. As shown in Fig. 15, a first guest key KN1 and a second guest key KN2 are registered to a twelfth device 30L. The storage device 37 of the twelfth device 30L stores first guest key information DKN1 indicating the first guest key KN1. The storage device 37 of the twelfth device 30L stores second guest key information DKN2 indicating the second guest key KN2. The first device 30A, the second device 30B, the third device 30C, the fifth device 30E, and the sixth device 30F are the same as those in Fig. 11.

The relationship between the twelfth device 30L and the third device 30C is such that the first guest key KN1 has been registered to the twelfth device 30L based on a registration request from the third device 30C. That is, the first guest key KN1 is registered based on the third digital key K3. In this case, the first guest key KN1 is a digital key that is one generation downstream in a direct lineage from the third digital key K3. The first guest key KN1 is a digital key that is two generations downstream in a direct lineage from the second digital key K2. The first guest key KN1 is a digital key that is three generations downstream in a direct lineage from the first digital key K1.

The relationship between the twelfth device 30L and the sixth device 30F is such that the second guest key KN2 has been registered to the twelfth device 30L based on a registration request from the sixth device 30F. That is, the second guest key KN2 is registered based on the sixth digital key K6. In this case, the second guest key KN2 is a digital key that is one generation downstream in a direct lineage from the sixth digital key K6. The second guest key KN2 is a digital key that is one generation downstream in a direct lineage from the fifth digital key K5. The second guest key KN2 is a digital key that is three generations downstream in a direct lineage from the first digital key K1.

The following describes a case in which the shareable key KS specified in the deletion request D61 is the second digital key K2. In step S122 shown in Fig. 10, the management server 70 selects the second device 30B, to which the second digital key K2 is registered, as the target shareable device 50T, which is a destination for the deletion command D62. Additionally, the management server 70 designates, as the shareable devices 50 to which the deletion command D62 is transmitted, the shareable devices 50 to which the shareable keys KS of generations downstream in a direct lineage from the second digital key K2 are registered. Specifically, the management server 70 designates the second device 30B, the third device 30C, and the twelfth device 30L as the destinations for the deletion command D62.

The deletion command D62 in this modification is a command to delete shareable keys KS of generations downstream in a direct lineage from the shareable key KS registered to the target shareable device 50T. In other words, the deletion process DEL in this modification is a process of deleting the shareable keys KS of the generations downstream in a direct lineage from the shareable key KS registered to the target shareable device 50T.

Specifically, the deletion command D62 in this modification is a command to delete the shareable keys KS of the generations downstream in a direct lineage from the second digital key K2 registered to the second device 30B, which is the target shareable device 50T. Therefore, the twelfth device 30L, which has received the deletion command D62, deletes the first guest key KN1, which is a shareable key KS of a generation downstream in a direct lineage from the second digital key K2. Specifically, the twelfth device 30L deletes the first guest key information DKN1 stored in the storage device 37 of the twelfth device 30L. The second guest key information DKN2 stored in the storage device 37 of the twelfth device 30L is not deleted by the deletion command D62.

In a case in which multiple shareable keys KS are registered to one shareable device 50, the above-described management server 70 is capable of deleting the shareable key KS of the generations downstream in a direct lineage from the shareable key KS specified in the deletion request D61.

### Inquiry Request D63

Upon receiving the deletion request D61, the management server 70 may transmit only the list 81 shown in Fig. 13 to the source of the deletion request D61, instead of the inquiry request D63. Upon receiving the deletion request D61, the management server 70 does not necessarily need to transmit the inquiry request D63 to the source of the deletion request D61. Upon receiving the deletion request D61, the management server 70 does not necessarily need to generate the inquiry request D63.

### Shareable Key KS to be Protected

The management server 70 does not necessarily need to be configured to designate shareable keys KS to be protected.

### Checkboxes CB Displayed on the HMI32

As shown in Fig. 13, checkboxes CB are displayed next to the shareable keys KS included in the list 81 displayed on the HMI32 of the owner device 40, which has received the inquiry request D63. When an operation of specifying registered shareable keys KS and requesting deletion of the shareable keys KS is executed on the owner device 40, the owner device 40 generates the deletion request D61 specifying registered shareable keys KS. Therefore, the inquiry request D63 may be configured such that the checkbox CB is not displayed beside the shareable key KS specified in the deletion request D61. For example, when the shareable keys KS specified in the deletion request D61 is the second digital key K2, the inquiry request D63 may be configured such that the first checkbox 82 is not displayed next to the "Second Digital Key" in the list 81 shown in Fig. 13.

### Management System 10

The vehicle 20 may lack at least one of the BLE module 23, the UWB module 24, and the NFC module 25. The vehicle 20 is capable of performing short-range communication with the device 30 as long as the vehicle 20 includes at least one module. Also, the vehicle 20 may include modules other than those listed above, provided that the module is capable of performing short-range communication with the device 30.

The digital key-related aspects in the above-described embodiment need not conform to the CCC standard.

The vehicle management device 26 may include circuitry including one or more processors that perform various processes according to computer programs (software). The vehicle management device 26 may be circuitry including one or more dedicated hardware circuits such as application specific integrated circuits (ASIC) that execute at least part of various processes, or a combination thereof. Each processor includes a CPU and memory such as RAM and ROM. The memory stores program codes or commands configured to cause the CPU to execute processes. The memory, which is a computer readable storage medium, includes any type of storage media that are accessible by general-purpose computers and dedicated computers. The same applies to the devices 30 and the management server 70.

The vehicle management device 26 is not limited to the digital key ECU. The vehicle management device 26 may be, for example, a central ECU that integrally manages multiple ECUs included in the vehicle 20.

The devices 30 are not limited to smartphones. The devices 30 may be smartwatches. Further, the devices 30 may be prescribed servers. In this case, the devices 30 may be included in a prescribed server. For example, when a vehicle rental service provider or a vehicle sharing service provider is the owner of the vehicle 20, the owner device 40 may be included in a prescribed server. Further, for example, the friend device 51 may be included in the prescribed server.

A separate device server 60 does not necessarily need to be provided for each type of device 30. It is sufficient that the multiple devices 30 and the management server 70 wirelessly communicate with each other. The device server 60 may be omitted. It is sufficient that the multiple devices 30 and the management server 70 communicate directly via wireless communication.

The management server 70 may include multiple servers. For example, the management server 70 may include a server that stores the database DB and a server that executes a server program PS. In addition, for example, the management server 70 may include a server that communicates with the vehicles 20 and a server that communicates with the device server 60, and these servers may communicate with each other.

The management server 70 does not necessarily need to store the database DB. It is sufficient that the management server 70 manage at least a combination of the key information DK of the device 30 and the authentication information AT of the vehicle management device 26 for one digital key in the management system 10.

### Various Types of Information

The authentication information AT is not limited to the example of the above-described embodiment as long as it is information for authenticating digital keys when digital keys are used. For example, the authentication information AT may be a common key shared by the vehicle management device 26 and the device 30. Further, for example, the authentication information AT may be a shared secret key.

The configuration of the information included in the key information DK is not limited to the example of the above-described embodiment. For example, the owner key information DKO does not necessarily need to include the slot identification information ST4. Further, for example, the key information DK may include information indicating the type of the digital key. The type of the digital key is, for example, information indicating one of the owner key KO, the friend key KF, and the guest key KN.

The database DB may include information indicating the type of the devices 30. The type of the devices 30 is, for example, information indicating any one of smartphone, smartwatch, the prescribed server as in the above described modification, and the like.

The structure of the data DA in the database DB is not limited to the example of the above-described embodiment. The database DB may be modified as long as it includes information necessary for the management server 70 to perform management in the management system 10.

### Series of Processes for Registering Digital Keys

The series of processes for registering the owner key KO is not limited to the example in the above-described embodiment. For example, even if pairing through the process of step S12 is not performed, the owner device 40 may store the owner key information DKO by transmitting and receiving information such as the generation data DC between the vehicle 20 and the first device 30A via the management server 70. The series of processes for registering the owner key KO may be appropriately modified to align with the structure of the information included in the owner key information DKO and the structure of the information included in the authentication information AT.

The series of processes for registering the friend keys KF is not limited to the example in the above-described embodiment. For example, the management server 70 may update the database DB through the process of step S29 after transmitting the authentication package ATP and the storage request D24 to the vehicle 20. The series of processes for registering the friend key KF may be appropriately modified to align with the structure of the information included in the friend key information DKF and the structure of the information included in the authentication information AT.

The series of processes for registering the guest keys KN is not limited to the example in the above-described embodiment. The order of processes may differ from the series of processes for registering the friend key KF. The series of processes for registering the guest key KN may be appropriately modified to align with the structure of the information included in the guest key information DKN and the structure of the information included in the authentication information AT.

The types of digital keys do not necessarily need to include the guest keys KN. In other words, in the management system 10, the shareable keys KS may only include friend keys KF.

### Series of Processes for Deleting Digital Keys

In the above-described embodiment, when deleting a guest key KN, the friend device 51 transmits the deletion reservation D41 to the management server 70, but this does not need to be a request for a reservation. The friend device 51 may transmit a request to delete the guest key KN to the management server 70 regardless of the specified condition RC. Further, the management server 70 may proceed with the processes in step S62 and the subsequent steps in response to a request to delete the guest key KN from not only a friend device 51 but also from the owner device 40.

The following describes a case in which an operation of requesting deletion of a guest key KN is executed in a guest device 52. In this case, the guest device 52 may transmit, to the management server 70, a request to delete the guest key KN registered to the guest device 52, instead of the process in step S81 of Fig. 9. Upon receiving the request, the management server 70 generates a request to delete the guest key information DKN, as in step S66 shown in Fig. 8. Thereafter, the management server 70 transmits a request to delete the guest key information DKN to the guest device 52. The guest device 52, which has received the request to delete the guest key information DKN, deletes the guest key information DKN, as in step S67 shown in Fig. 8. Thereafter, the guest device 52 transmits, to the management server 70, a notification indicating that the guest key information DKN has been deleted. After receiving the notification indicating that the guest device 52 has deleted the guest key information DKN, the management server 70 advances the processes of step S82 and subsequent steps shown in Fig. 9. The guest device 52 does not necessarily need to transmit, to the management server 70, a notification indicating that the guest key information DKN has been deleted. In this case, the management server 70 transmits a request to delete the guest key information DKN to the guest device 52, and then advances the process of step S82 and subsequent steps shown in Fig. 9.

In a case in which the guest key KN is deleted in response to operation of the friend device 51, and in a case in which the guest key KN is deleted in response to operation of the guest device 52, a deletion reservation may be sent to the management server 70. In a case in which the friend key KF is deleted due to an operation of the owner device 40, a reservation for deletion may be sent to the management server 70. In a case in which the guest key KN is deleted due to an operation of the owner device 40, a reservation for deletion may be sent to the management server 70.

In a case in which a reservation for deletion of the target shareable device 50T is requested, the management server 70 may transmit a deletion command to the shareable devices 50 to which the shareable keys KS have been registered based on a request from the target shareable device 50T if the specified condition RC is met. The specified condition RC may be individually set for each of the multiple shareable devices 50 to which the shareable keys KS have been registered based on a request from the target shareable device 50T.

The owner device 40 and the vehicle 20 may request deletion of the guest key KN. Further, for example, the management server 70 may generate a request to delete the guest key KN.

The shareable device 50 has a function of receiving the shareable key KS as in the above-described embodiment. A device 30 that is capable of receiving a digital key, such as a shareable device 50, may be referred to as a receiver device.

The management server 70 includes a central processing unit (CPU), random-access memory (RAM) and read-only memory (ROM). The management server 70 executes a software process. However, this is only an example. For example, the management server 70 may include a dedicated hardware circuit that executes at least part of the software processing executed in each of the above-described embodiment. The dedicated hardware circuit is, for example, an application specific integrated circuit (ASIC). That is, the management server 70 may be modified to have any one of the following configurations (a) to (c). (a) The management server 70 includes a processor that executes all the processes according to programs and a program storage device such as a ROM that stores the programs. That is, the management server 70 includes a software execution device. (b) The management server 70 includes a processor that executes part of processes according to a program and a program storage. The management server 70 further includes a dedicated hardware circuit that executes the remaining processes. (c) The management server 70 further includes a dedicated hardware circuit that executes all of the processes. There may be multiple software execution devices and/or dedicated hardware circuits. That is, the above-described processes may be executed by processing circuitry including at least one of a software execution device and a dedicated hardware circuit. The processing circuitry may include multiple software execution devices and multiple dedicated hardware circuits. The program storage device, or computer readable medium, includes any type of storage device that is a medium accessible by a versatile computer or a dedicated computer. The program may be stored in a computer-readable non-volatile data storage medium such as a CD-ROM and distributed as a program product. The program may be provided as a downloadable program product by an information provider connected to a network such as the internet.

### Clauses

Technical concepts obtained from the above-described embodiment and the modifications will now be described.

### [Clause 1]

A deletion method performed by a management server (70) configured to manage multiple digital keys employed in a vehicle (20), in which
the multiple digital keys include:
   an owner key (KO) registered to an owner device (40) that is a device belonging to an owner of the vehicle (20); and
   multiple shareable keys (KS) respectively registered to multiple shareable devices (50),
each of the shareable devices (50) is a device different from the owner device (40),
only in response to reception of a deletion request from the owner device (40), the deletion request specifying one of the shareable keys (KS) that is registered to a target shareable device (50T) that is one of the shareable devices (50), the deletion method includes:
   causing processing circuitry of the management server (70) to generate a deletion command to delete the shareable key (KS) registered to the target shareable device (50T); and
   executing a deletion process that deletes:
      the shareable key (KS) specified in the received deletion request; and
      one of the shareable keys (KS) that has been registered to a different shareable device (50) based on a request from the target shareable device (50T).

### [Clause 2]

A deletion method performed by a management server (70) configured to manage multiple digital keys employed in a vehicle (20), in which
the multiple digital keys include:
   an owner key (KO) registered to an owner device (40) that is a device belonging to an owner of the vehicle (20); and
   multiple shareable keys (KS) respectively registered to multiple shareable devices (50),
each of the shareable devices (50) is a device different from the owner device (40), when:
   the management server (70) receives a deletion request specifying one of the shareable keys (KS) that is registered to a target shareable device (50T) that is one of the shareable devices (50); and
   the shareable key (KS) specified in the received deletion request is a shareable key (KS) of a generation downstream in a direct lineage from the shareable key (KS) registered to the shareable device (50) that is a source of the deletion request, the deletion method includes:
causing processing circuitry of the management server (70) to generate a deletion command to delete the shareable key (KS) registered to the target shareable device (50T); and
executing a deletion process that deletes:
   the shareable key (KS) specified in the received deletion request; and
   one of the shareable keys (KS) that has been registered to a different shareable device (50) based on a request from the target shareable device (50T).

### [Clause 3]

A deletion method performed by a management server (70) configured to manage multiple digital keys employed in a vehicle (20), in which
the multiple digital keys include:
   an owner key (KO) registered to an owner device (40) that is a device belonging to an owner of the vehicle (20); and
   multiple shareable keys (KS) respectively registered to multiple shareable devices (50),
each of the shareable devices (50) is a device different from the owner device (40),
in response to reception of a deletion request specifying one of the shareable keys (KS) that is registered to a target shareable device (50T) that is one of the shareable devices (50), the deletion method comprises:
   causing processing circuitry of the management server (70) to generate a deletion command to delete a shareable key (KS) of a generation downstream in a direct lineage from the shareable key (KS) registered to the target shareable device (50T); and
   executing a deletion process that deletes:
      the shareable key (KS) specified in the received deletion request; and
      one or more of the shareable keys (KS) in generations downstream in a direct lineage from the shareable key (KS) specified in the deletion request.

### [Clause 4]

A management server (70), configured to execute the deletion method according to any one of clauses 1 to 3.

### [Clause 5]

A deletion program, where the deletion program, when executed by processing circuitry, causes the processing circuitry to perform the deletion method according to any one of clauses 1 to 3.

Various changes in form and details may be made to the examples above without departing from the spirit and scope of the claims and their equivalents. The examples are for the sake of description only, and not for purposes of limitation. Descriptions of features in each example are to be considered as being applicable to similar features or aspects in other examples. Suitable results may be achieved if sequences are performed in a different order, and/or if components in a described system, architecture, device, or circuitry are combined differently, and/or replaced or supplemented by other components or their equivalents. The scope of the disclosure is not defined by the detailed description, but by the claims and their equivalents. All variations within the scope of the claims and their equivalents are included in the disclosure.

## Claims

1. A management server (70) configured to manage multiple digital keys employed in a vehicle (20), wherein
the digital keys include:
an owner key (KO) registered to an owner device (40) that is a device belonging to an owner of the vehicle (20); and
multiple shareable keys (KS) respectively registered to multiple shareable devices (50),
each of the shareable devices (50) is a device different from the owner device (40), and
the management server (70) is configured to execute:
a deletion process in response to receiving a deletion request specifying one of the shareable keys (KS) that is registered to a target shareable device (50T) that is one of the shareable devices (50), the deletion process deleting:
the shareable key (KS) specified in the received deletion request; and
one of the shareable keys (KS) that has been registered to a different shareable device (50) based on a request from the target shareable device (50T).

2. The management server (70) according to claim 1, wherein
the one of the shareable keys (KS) that has been registered to the different shareable device (50) based on the request from the target shareable device (50T) belongs to a first generation,
a shareable key (KS) that has been registered based on a request from the different shareable device (50) belongs to a second generation, and
the deletion process includes deleting the shareable keys (KS) of the first and subsequent generations downstream in a direct lineage from the shareable key (KS) registered to the target shareable device (50T).

3. The management server (70) according to claim 1 or 2, wherein
the management server (70) is configured to designate one of the shareable keys (KS) as a shareable key (KS) to be protected, and
the management server (70) is configured not to execute the deletion process on the shareable key (KS) designated as the key to be protected.

4. The management server (70) according to any one of claims 1 to 3, wherein the management server (70) is configured to transmit, in response to receiving the deletion request, a list (81) of two or more shareable keys (KS) that are subject to the deletion process among the shareable keys (KS) to a source of the deletion request.

5. The management server (70) according to claim 3, wherein, in response to receiving the deletion request, the management server (70):
transmits, to a source of the deletion request, a list (81) of two or more shareable keys (KS) that are subject to the deletion process among the shareable keys (KS), and
prompts a user to select which of the two or more shareable keys (KS) in the list (81) is to be designated as the key to be protected.

6. A management system (10), comprising:
a vehicle (20); and
a management server (70) configured to manage multiple digital keys employed in the vehicle (20), wherein
the digital keys include:
an owner key (KO) registered to an owner device (40) that is a device belonging to an owner of the vehicle (20); and
multiple shareable keys (KS) respectively registered to multiple shareable devices (50),
each of the shareable devices (50) is a device different from the owner device (40), and
the management server (70) is configured to execute:
a deletion process in response to receiving a deletion request specifying one of the shareable keys (KS) that is registered to a target shareable device (50T) that is one of the shareable devices (50), the deletion process deleting:
the shareable key (KS) specified in the received deletion request; and
one of the shareable keys (KS) that has been registered to a different shareable device (50) based on a request from the target shareable device (50T).

7. A deletion method performed by a management server (70) configured to manage multiple digital keys employed in a vehicle (20), wherein
the digital keys include:
an owner key (KO) registered to an owner device (40) that is a device belonging to an owner of the vehicle (20); and
multiple shareable keys (KS) respectively registered to multiple shareable devices (50),
each of the shareable devices (50) is a device different from the owner device (40),
in response to reception of a deletion request specifying one of the shareable keys (KS) that is registered to a target shareable device (50T) that is one of the shareable devices (50), the deletion method comprising:
causing processing circuitry of the management server (70) to generate a deletion command to delete the shareable key (KS) registered to the target shareable device (50T); and
executing a deletion process that deletes:
the shareable key (KS) specified in the received deletion request; and
one of the shareable keys (KS) that has been registered to a different shareable device (50) based on a request from the target shareable device (50T).

8. A deletion program, wherein the deletion program, when executed by processing circuitry, causes the processing circuitry to perform the deletion method according to claim 7.
